(19) Europäisches Patentamt
European Patent Office
Office européen des brevets

(11) EP 1 038 918 A1

(12) EUROPEAN PATENT APPLICATION
published in accordance with Art. 158(3) EPC

(43) Date of publication:
**27.09.2000 Bulletin 2000/39**

(21) Application number: **98959134.2**

(22) Date of filing: **09.12.1998**

(51) Int. Cl.[7]: **C08L 23/00**, C08L 53/02, C08L 23/16

(86) International application number:
**PCT/JP98/05562**

(87) International publication number:
**WO 99/29774 (17.06.1999 Gazette 1999/24)**

(84) Designated Contracting States:
**BE CH DE FR IT LI**

(30) Priority: **11.12.1997 JP 34127497**

(71) Applicant:
**Sumitomo Chemical Company, Limited**
**Osaka-shi Osaka 541-8550 (JP)**

(72) Inventors:
- **NAKATSUJI, Yoshihiro**
  **Chiba-shi Chiba 267-0066 (JP)**
- **SUGIMOTO, Hiroyuki**
  **Funabashi-shi Chiba 274-0824 (JP)**
- **OHTANI, Kohsuke**
  **Sodegaura-shi Chiba 299-0241 (JP)**

(74) Representative:
**VOSSIUS & PARTNER**
**Siebertstrasse 4**
**81675 München (DE)**

# (54) THERMOPLASTIC OLEFIN ELASTOMER COMPOSITION

(57) A thermoplastic olefin elastomer composition which comprises the following ingredients (a), (b), and (c) in amounts of 5 to 93 wt.%, 2 to 90 wt.%, and 5 to 93 wt.%, respectively [(a)+(b)+(c)=100 wt%)]: (a) a polyolefin resin; (b) at least one of the following ingredients (b1) and (b2): (b1) an aromatic vinyl/conjugated diene block copolymer obtained by hydrogenating a block copolymer made up of at least two polymer blocks derived from an aromatic vinyl compound and at least one polymer block derived from a conjugated diene compound and (b2) an ethylene/α-olefin copolymer rubber; and (c) at least one of the following ingredients (c1) and (c2): (c1) a propylene/1-butene copolymer rubber having a Shore A hardness of 70 or lower and an intrinsic viscosity [η] of 0.3 dl/g or higher and (c2) a rubbery copolymer of propylene, a $C_{4\text{-}20}$ α-olefin, and ethylene, which has a Shore A hardness of 70 or lower and an intrinsic viscosity [η] of 0.3 dl/g or higher.

EP 1 038 918 A1

## Description

### Technical Field

The present invention relates to an olefin-based thermoplastic elastomer composition. More specifically, the present invention relates to an olefin-based thermoplastic elastomer composition making the best use of the merits of an olefin-based material such as its lightweight, easy recycle use, further no generation of poisonous gas when being burnt up, and the like, and being excellent in melt property and flexibility, and further in scratch resistance.

### Background Art

An olefin-based thermoplastic elastomer has been widely used for automobile parts, industrial instrument parts, electric and electronic parts, building materials and the like as an energy-saving and resource-saving elastomer, because it is lightweight and easily recycled. Further, an olefin-based thermoplastic elastomer not generating a harmful gas has been recently used from the viewpoint of the protection of Earth environment in replace of a vinyl chloride resin generating a harmful gas at combustion.

However, a conventional olefin-based thermoplastic elastomer has a defect that melt-flowability at molding is inferior in comparison with a soft vinyl chloride resin composition, and if the melt-flowability is tried to be improved, flexibility becomes insufficient. Accordingly, an improvement for satisfying both the melt-flowability and the flexibility has been desired.

Under these circumstances, the object of the present invention is to provide an olefin-based thermoplastic elastomer composition making the best use of the merits of an olefin-based material such as its lightweight, easy recycle use, further no generation of poisonous gas when being burnt up, and the like, and being excellent in melt property and flexibility, and further in scratch resistance.

### Disclosure of the Invention

Namely, the present invention relates to an olefin-based thermoplastic elastomer composition containing 5 to 93% by weight of (a), 2 to 90% by weight of (b) and 5 to 93% by weight of (c) {(a) + (b) + (c) = 100% by weight} described below;

(a): a polyolefin-based resin,
(b): at least one of (b1) and (b2) described below;

> (b1): a hydrogenated aromatic vinyl compound-conjugated diene compound block copolymer obtained by hydrogenating a block copolymer composed of at least two polymer blocks of an aromatic vinyl compound and at least one polymer block of a conjugated diene compound,
> (b2): an ethylene-α-olefin-based copolymer rubber,

(c): at least one of (c1) and (c2) described below;

> (c1): a propylene-1-butene-based copolymer rubber having a Shore A hardness of 70 or less measured in accordance with ASTM D2240 and an intrinsic viscosity [η] of 0.3dl/g or more measured at a temperature of 70°C in xylene, and
> (c2): a propylene-α-olefin-ethylene-based copolymer rubber having a Shore A hardness of 70 or less measured in accordance with ASTM D2240 and an intrinsic viscosity [η] of 0.3dl/g or more measured at a temperature of 70°C in xylene and comprising propylene, an α-olefin having 4 to 20 carbon atoms and ethylene.

### Best Mode for Practicing the Invention

The polyolefin-based resin (a) used in the present invention includes a crystalline polymer or copolymer obtained by polymerizing at least one or more of olefins (for example, a propylene homopolymer, a copolymer of propylene with ethylene and/or an α-olefin other than propylene, an ethylene homopolymer, a copolymer of ethylene with an α-olefin other than ethylene, and the like), a copolymer obtained by copolymerizing at least one or more of olefins at 2 steps or more (for example, a propylene-ethylene block copolymer which is obtained by carrying out the homopolymerization of propylene in the first step and carrying out the copolymerization of propylene with ethylene in the second step, a propylene-olefin copolymer which is obtained by carrying out copolymerizations of propylene with an olefin in the first step, second step and successive steps and has different copolymerization compositions in respective steps,

and the like). Preferable (a) is a propylene-based polymer, namely, a propylene homopolymer or a propylene-based copolymer mainly containing propylene.

(b) used in the present invention is (b1): a hydrogenated aromatic vinyl compound-conjugated diene compound block copolymer obtained by hydrogenating a block copolymer composed of at least two polymer blocks of an aromatic vinyl compound and at least one polymer block of a conjugated diene compound, and/or (b2): an ethylene-α-olefin-based copolymer rubber.

Specific examples of the aromatic vinyl compound of (b1) include styrene, α-methylstyrene, p-methylstyrene, vinyl xylene, monochlorostyrene, dichlorostyrene, monobromostyrene, ethylstyrene, vinyl naphthalene and the like. Among these, styrene is preferable from the viewpoint of industrialization.

Specific examples of the conjugated diene compound of (b1) include butadiene, isoprene, 2,3-dimethyl-1,3-butadiene, 2-neopentyl-1,3-butadiene, 2-chloro-1,3-butadiene, 2-cyano-1,3-butadiene and the like. Among these, butadiene or isoprene is preferable from the viewpoint of industrialization.

Further, the content of the polymer block composed of the aromatic vinyl compound in the block copolymer is not specifically limited, and usually 3 to 30% by weight and preferably 5 to 20% by weight. When the content is less than 3% by weight, a molded article obtained tends to be sticky, and when it exceeds 30% by weight, there occur occasionally problems that the touch of the molded article obtained becomes rigid and, further its strength becomes insufficient.

The hydrogenation rate is preferably 80 to 100% in the conjugated diene block. When the hydrogenation rate is less than 80%, there happen to occur problems that the heat resistance and light resistance of the molded article obtained are inferior.

(b2) includes an ethylene-α-olefin copolymer rubber and an ethylene-α-olefin-non-conjugated diene copolymer rubber. Examples of the α-olefin in the ethylene-α-olefin-based copolymer rubber include, 1-butene, 1-pentene, 1-hexene, 4-methyl-pentene, 1-octene, 1-decene and the like, and among them, propylene is preferable. Further, examples of the non-conjugated diene include 1,4-hexadiene, dicyclopentadiene, 5-ethylidene-2-norbornene, and the like.

The ethylene content in the ethylene-α-olefin copolymer rubber or the ethylene-α-olefin-non-conjugated diene copolymer rubber is usually within a range of 50 to 95% by weight and preferably 70 to 90% by weight. Further, iodine value for the non-conjugated diene is preferably 20 or less. When the iodine value exceeds 20, the moldability and the weatherability of the molded article obtained tend to be deteriorated.

An ethylene-propylene copolymer rubber is preferable from the viewpoint of low temperature impact as (b2).

The ratio of (b1)/(b2) in case of using (b1) and (b2) in combination is not specifically limited because it differs according to a molding method, and preferably 20/80 or more.

(c) used in the present invention is at least one of (c1) a propylene-butene-1-based copolymer rubber having a Shore A hardness of 70 or less measured in accordance with ASTM D2240 and an intrinsic viscosity [η] of 0.3dl/g or more measured at a temperature of 70°C in xylene, and

(c2) a propylene-α-olefin-ethylene-based copolymer rubber having a Shore A hardness of 70 or less measured in accordance with ASTM D2240 and an intrinsic viscosity [η] of 0.3dl/g or more measured at a temperature of 70°C in xylene solvent and comprising propylene, an α-olefin having 4 to 20 carbon atoms (for example, 1-butene, 1-pentene, 4-methyl-1-pentene, 1-hexene, 1-octene, 1-decene and the like) and ethylene.

Further, when (c1) and (c2) are used, the proportion used is not specifically limited.

The Shore A hardness measured in accordance with ASTM D2240 is 70 or less and preferably 60 or less in (c1) and (c2). When said hardness is too high, the thermoplastic elastomer obtained is inferior in flexibility.

The intrinsic viscosity [η] measured at 70°C in xylene is 0.3dl/g or more and preferably 0.5dl/g or more in (c1) and (c2). When the intrinsic viscosity is too low, the tensile elongation property of the thermoplastic elastomer obtained is poor.

The measurement of the intrinsic viscosity [η] is carried out at 70°C in xylene using a Ubbelohde viscometer. A sample of 300mg is dissolved in 100ml of xylene to prepare a solution having a concentration of 3mg/ml. Said solution is further diluted to concentrations of 1/2, 1/3 and 1/5, and each of the solutions is measured in a constant-temperature water bath of 70°C (± 0.1°C). The measurement is repeated three times at the respective concentrations, and an average of the values obtained is used. Herein, a value obtained by setting reduced viscosity (a value determined by $((\eta/\eta_0)-1)/C$ when the viscosity of a solution is η, the viscosity of a solvent is $\eta_0$, and the concentration of the solution is C) to an axis of ordinate, and setting the concentration to an axis of abscissa, is plotted. Approximate straight lines are drawn from these points, and the extrapolated value of the reduced viscosity at a concentration of zero was referred to as the intrinsic viscosity.

In (c1) and (c2), those having neither crystal-melting peak nor crystallization peak at measurement by a differential scanning calorimeter (DSC) are preferable.

When such conditions are not satisfied, the thermoplastic elastomer obtained happens to be inferior in flexibility. As the differential scanning calorimeter, for example, DSC220C manufactured by Seiko Electronics Industry, Co. Ltd. is used and both of the measurements at heating process and temperature-lowering process are carried out at a

rate of 10°C/min.

In (c1) and (c2), those having a molecular weight distribution (Mw/Mn) of 3 or less at measurement by gel permeation chromatography (GPC) are preferable. When the molecular weight distribution is too broad, the stickiness of the thermoplastic elastomer is occasionally enlarged.

The measurement of molecular weight distribution by GPC is carried out under the conditions below, for example, using 150C/GPC apparatus manufactured by Waters Co. Ltd.

Elution temperature is 140°C, a column used is, for example, Shodex Packed Column A-80M manufactured by Showa Denko Co. Ltd., and a polystyrene (for example, molecular weight 68-8,400,000 manufactured by Toso Co, Ltd.) is used as a molecular weight standard substance. A polystyrene-reduced weight average molecular weight (Mw) and number average molecular weight (Mn) are obtained, and further, the ratio (Mw/Mn) is referred to as molecular weight distribution.

A sample for measurement is prepared by dissolving about 5mg of a polymer in 5ml of o-dichlorobenzene to be a concentration of about 1mg/ml. 400 μL of the sample solution obtained is injected, the flow rate of elution solvent is 1.0ml/min., and it is detected by a refractive index detector.

The 1-butene content in (c1) is preferably 0.5 to 90% by mole and further preferably 1 to 70% by mole. When said content is too little, the flexibility of the olefin-based thermoplastic elastomer composition is occasionally poor, and on the other hand, when said content is too much, the molecular weight of a copolymer is remarkably lowered and the scratch resistance of the olefin-based thermoplastic elastomer composition is occasionally poor.

The propylene content and α-olefin content in (c2) have preferably the relations below;

$$y/(100-x) \geqq 0.3 ,$$

more preferably $y/(100-x) \geqq 0.4$ , and
further preferably $y/(100-x) \geqq 0.5$.

When the content deviate from the ranges, the flexibility of the olefin-based thermoplastic elastomer composition is occasionally poor. In the above equations, x represents the propylene content (% by mole) in the copolymer and y represents the content (% by mole) of the α-olefin having 4 to 20 carbons in the copolymer.

The propylene content in (c2) is preferably 90% by mole or less when low-temperature resistance is required in particular, more preferably 80% by mole or less, further preferably 70% by mole or less, preferably 60% by mole or less in particular, and most preferably 50% by mole or less. When the content deviates from the range, the low-temperature impact of the olefin-based thermoplastic elastomer composition is occasionally poor.

In (c1) and (c2), a non-conjugated diene such as 1,4-hexadiene, 1,6-octadiene, dicyclopentadiene, 2-methyl-2,5-norbonadiene, 5-ethylidene-2-norbornene or the like and an aromatic vinyl compound such as styrene, α-methylstyrene, 2,4-dimethylstyrene, p-methylstyrene, or the like may be copolymerized.

In (c1) and (c2), a portion insoluble in boiling n-heptane is preferably 5% by weight or less and further preferably 3% by weight or less. When said insoluble portion is too much, the thermoplastic elastomer composition obtained is occasionally inferior in flexibility.

Further, in (c1) and (c2), a portion soluble in boiling methyl acetate is preferably 2% by weight or less. When the soluble portion is too much, the stickiness of the thermoplastic elastomer composition is occasionally enlarged.

The configuration of propylene and/or 1-butene side chain in (c1) and the configuration of propylene and/or α-olefin side chain in (c2) are preferably an atactic structure.

The configuration being an atactic structure indicates a case that the configuration of the side chain of propylene sequence in a copolymer is an atactic structure, a case that the configuration of the side chain of 1-butene or α-olefin sequence in a copolymer is an atactic structure, and a case that the configuration of the side chain of propylene/1-butene-mixed sequence in a copolymer or propylene/α-olefin-mixed sequence in a copolymer is an atactic structure. The atactic structure can be confirmed, for example, by the fact that when propylene is homopolymerized using the transition metal complex of the catalyst component used in the polymerization of (c1) and (c2), the homopolypropylene obtained has a structure in which F(1) value defined by the equation described below using the respective intensities [mm], [mr] and [rr] attributed to mm, mr and rr of the methyl carbon of propylene which can be determined by $^{13}$C-NMR spectrum, is 40 or more and 60 or less, preferably 43 or more and 57 or less, and further preferably 45 or more and 55 or less.

$$F(1) = 100 \times [mr]/([mm] + [mr] + [rr])$$

Similarly, concerning (c1) and (c2), the atactic structure can be also confirmed by the fact that a value corresponding to F(1) determined by using the intensities of respective signals attributed to mm, mr and rr of the methyl carbon of propylene, the branched methylene carbon of 1-butene, the branched terminal methyl carbon of 1-butene, and the like, is within the above-mentioned range. Then (c1) and (c2) have not the atactic structure, the thermoplastic

elastomer composition obtained is occasionally inferior in flexibility because of its high hardness. Further, the attributions of the methyl carbon of propylene, the branched methylene carbon of 1-butene or α-olefin, the branched terminal methyl carbon of 1-butene or α-olefin, and the like can be carried out by referring to, for example, T.Asakura, "Macromolecules, Vol.24(1991), page 2334" and "High Polymer Analysis Handbook (1995), New Edition" published by Kinokuniya Shoten Co., Ltd.

(c1) and (c2) can be suitably produced by copolymerizing propylene and 1-butene, or propylene, α -olefin and ethylene with a polymerization catalyst which provides a polypropylene having neither crystal-melting peak nor crystallization peak at measurement by a differential scanning calorimeter (DSC), which is obtained by polymerizing propylene in the presence of the polymerization catalyst.

As the most suitable polymerization catalyst for producing (c1) and (c2), a polymerization catalyst prepared by using (A) described below, and (B) described below and/or (C) described below:

(A): a transition metal complex represented by the following general formula [I]:

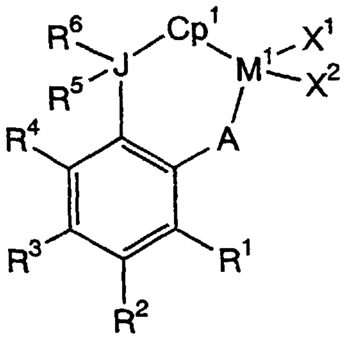

[ I ]

(wherein $M^1$ represents a transition metal atom of Group IV of the Periodic Table of the Elements; A represents an atom of Group XVI of the Periodic Table of the Elements; J represents an atom of Group XIV of the Periodic Table of the Elements; $Cp^1$ represents a group having a cyclopentadiene type anion skeleton; $X^1$, $X^2$, $R^1$, $R^2$, $R^3$, $R^4$, $R^5$ and $R^6$ independently represent a hydrogen atom, a halogen atom, an alkyl group, an aralkyl group, an aryl group, a substituted silyl group, an alkoxy group, an aralkyloxy group, an aryloxy group or a di-substituted amino group; and $R^1$, $R^2$, $R^3$, $R^4$, $R^5$ and $R^6$ may be optionally combined with each other to form a ring);

(B): at least one aluminum compound selected from the following (B1) to (B3)

(B1) an organoaluminum compound represented by the general formula $E^1_dAlZ_{3-d}$,

(B2) a cyclic aluminoxane having a structure represented by the general formula $\{-Al(E^2)-O-\}_e$, and

(B3) a linear aluminoxane having a structure represented by the general formula $E^3\{-Al(E^3)-O-\}_fAlE^3_2$ (wherein $E^1$, $E^2$ and $E^3$ respectively represents a hydrocarbon group, all of $E^1$, $E^2$ and $E^3$ may be the same or different; Z represents a hydrogen atom or a halogen atom, and all of Z may be the same or different; d represents a numeral of 0 to 3 ; e represents an integer of not less than 2; and f represents an integer of not less than 1); and

(C): a boron compound of any one of the following (C1) to (C3);

(C1) a boron compound represented by the general formula $BQ^1Q^2Q^3$,

(C2) a boron compound represented by the general formula $G^+(BQ^1Q^2Q^3Q^4)^-$, and

(C3) a boron compound represented by the general formula $(L-H)^+(BQ^1Q^2Q^3Q^4)^-$

(wherein B represents a boron atom in the trivalent valence state; $Q^1$ to $Q^4$ may be the same or different and represent a halogen atom, a hydrocarbon group, a halogenated hydrocarbon group, a substituted silyl group, an alkoxy group or a di-substituted amino group; G+ represents an inorganic or organic cation; L represents a neutral Lewis base; and (L-H)+ represents a Brønsted acid).

(A) Transition metal complex

In the general formula [I], the transition metal atom represented by $M^1$ means a transition metal element of Group IV of the Periodic Table of the Elements (IUPAC Inorganic Chemistry Nomenclature, Revised Edition, 1989), and examples thereof include titanium atom, zirconium atom, hafnium atom, etc. Among them, titanium atom or zirconium atom is preferred.

Examples of the atom of Group XVI of the Periodic Table of the Elements as for A in the general formula [I] include oxygen atom, sulfur atom, selenium atom, etc, preferably oxygen atom.

Examples of the atom of Group XIV of the Periodic Table of the Elements as for J in the general formula [I] include a carbon atom, silicon atom, germanium atom. etc., preferably a carbon atom or silicon atom.

The group having a cyclopentadiene anion skeleton, as for the substituent $Cp^1$, includes, for example, a $\eta^5$-(substituted)cyclopentadienyl group, $\eta^5$-(substituted) indenyl group, $\eta^5$-(substituted)fluorenyl group, etc. Specific examples thereof include a $\eta^5$-cyclopentadienyl group, $\eta^5$-methylcyclopentadienyl group, $\eta^5$-dimethylcyclopentadienyl group, $\eta^5$-trimethylcyclopentadienyl group, $\eta^5$-tetramethylcyclopentadienyl group, $\eta^5$-ethylcyclopentadienyl group, $\eta^5$-n-propylcyclopentadienyl group, $\eta^5$-isopropylcyclopentadienyl group, $\eta^5$-n-butylcyclopentadienyl group, $\eta^5$-sec-butylcyclopentadienyl group, $\eta^5$-tert-butylcyclopentadienyl group, $\eta^5$-n-pentylcyclopentadienyl group, $\eta^5$-neopentylcyclopentadienyl group, $\eta^5$-n-hexylcyclopentadienyl group, $\eta^5$-n-octylcyclopentadienyl group, $\eta^5$-phenylcyclopentadienyl group, $\eta^5$-naphthylcyclopentadienyl group, $\eta^5$-trimethylsilylcyclopentadienyl group, $\eta^5$-triethylsilylcyclopentadienyl group, $\eta^5$-tert-butyldimethylsilylcyclopentadienyl group, $\eta^5$-indenyl group, $\eta^5$-methylindenyl group, $\eta^5$-dimethylindenyl group, $\eta^5$-ethylindenyl group, $\eta^5$-n-propylindenyl group, $\eta^5$-isopropylindenyl group, $\eta^5$-n-butylindenyl group, $\eta^5$-sec-butylindenyl group, $\eta^5$-tert-butylindenyl group, $\eta^5$-n-pentylindenyl group, $\eta^5$-neopentylindenyl group, $\eta^5$-n-hexylindenyl group, $\eta^5$-n-octylindenyl group, $\eta^5$-n-decylindenyl group, $\eta^5$-phenylindenyl group, $\eta^5$-methylphenylindenyl group, $\eta^5$-naphthylindenyl group, $\eta^5$-trimethylsilylindenyl group, $\eta^5$-triethylsilylindenyl group, $\eta^5$-tert-butyldimethylsilylindenyl group, $\eta^5$-tetrahydroindenyl group, $\eta^5$-fluorenyl group, $\eta^5$-methylfluorenyl group, $\eta^5$-dimethylfluorenyl group,$\eta^5$-ethylfluorenyl group, $\eta^5$-diethylfluorenyl group, $\eta^5$-n-propylfluorenyl group, $\eta^5$-di-n-propylfluorenyl group, $\eta^5$-isopropylfluorenyl group, $\eta^5$-diisopropylfluorenyl group, $\eta^5$-n-butylfluorenyl group, $\eta^5$-sec-butylfluorenyl group, $\eta^5$-tert-butylfluorenyl group, $\eta^5$-di-n-butylfluorenyl group, $\eta^5$-di-sec-butylfluorenyl group, $\eta^5$-di-tert-butylfluorenyl group, $\eta^5$-n-pentylfluorenyl group, $\eta^5$-neopentylfluorenyl group, $\eta^5$-n-hexylfluorenyl group, $\eta^5$-n-octylfluorenyl group, $\eta^5$-n-decylfluorenyl group, $\eta^5$-n-dodecylfluorenyl group, $\eta^5$-phenylfluorenyl group, $\eta^5$-diphenylfluorenyl group, $\eta^5$-methylphenylfluorenyl group, $\eta^5$-naphthylfluorenyl group, $\eta^5$-trimethylsilylfluorenyl group, $\eta^5$-bis-trimethylsilylfluorenyl group, $\eta^5$-triethylsilylfluorenyl group, $\eta^5$-tert-butyldimethylsilylfluorenyl group, etc. Among them, $\eta^5$-cyclopentadienyl group, $\eta^5$-methylcyclopentadienyl group, $\eta^5$ -tert-butylcyclopentadienyl group, $\eta^5$-tetramethylcyclopentadienyl group, $\eta^5$-indenyl group or $\eta^5$-fluorenyl group is particularly preferred.

Examples of the halogen atom in the substituent $x^1$, $x^2$, $R^1$, $R^2$, $R^3$,$R^4$,$R^5$ or $R^6$ include fluorine atom, chlorine atom, bromine atom and iodine atom, preferably chlorine atom or bromine atom, more preferably chlorine atom.

As the alkyl group in the substituent $X^1$, $X^2$, $R^1$, $R^2$, $R^3$, $R^4$, $R^5$ or $R^6$ an alkyl group having 1 to 20 carbon atoms is preferred. Examples thereof include a methyl group, ethyl group, n-propyl group, isopropyl group, n-butyl group, sec-butyl group, tert-butyl group, n-pentyl group, neopentyl group, amyl group, n-hexyl group, n-octyl group, n-decyl group, n-dodecyl group, n-pentadecyl group, n-eicosyl group, etc., more preferably a methyl group, ethyl group, isopropyl group, tert-butyl group or amyl group.

All of these alkyl groups may be substituted with a halogen atom (fluorine atom, chlorine atom, bromine atom or iodine atom). Examples of the alkyl group having 1 to 20 carbon atoms, which is substituted with the halogen atom, include fluoromethyl group, difluoromethyl group, trifluoromethyl group, chloromethyl group, dichloromethyl group, trichloromethyl group, bromomethyl group, dibromomethyl group, tribromomethyl group, iodomethyl group, diiodomethyl group, triiodomethyl group, fluoroethyl group, difluoroethyl group, trifluoroethyl group, tetrafluoroethyl group, pentafluoroethyl group, chloroethyl group, dichloroethyl group, trichloroethyl group, tetrachloroethyl group, pentachloroethyl group, bromoethyl group, dibromoethyl group, tribromoethyl group, tetrabromoethyl group, pentabromoethyl group, perfluoropropyl group, perfluorobutyl group, perfluoropentyl group, perfluorohexyl group, perfluorooctyl group, perfluorododecyl group, perfluoropentadecyl group, perfluoroeicosyl group, perchloropropyl group, perchlorobutyl group, perchloropentyl group, perchlorohexyl group, perchlorooctyl group, perchlorododecyl group, perchloropentadecyl group, perchloroeicosyl group, perbromopropyl group, perbromobutyl group, perbromopentyl group, perbromohexyl group, perbromooctyl group, perbromododecyl group, perbromopentadecyl group, perbromoeicosyl group, etc.

All of these alkyl groups may be partially substituted with an alkoxy group such as methoxy group, ethoxy group, etc., an aryloxy group such as phenoxy group, etc. or an aralkyloxy group such as benzyloxy group, etc.

As the aralkyl group in the substituent $X^1$, $X^2$, $R^1$, $R^2$, $R^3$, $R^4$, $R^5$ or $R^6$, an aralkyl group having 7 to 20 carbon atoms is preferred. Examples thereof include a benzyl group, (2-methylphenyl)methyl group, (3-methylphenyl)methyl group, (4-methylphenyl)methyl group, (2,3-dimethylphenyl)methyl group,(2,4-dimethylphenyl)methyl group, (2,5-dimethylphenyl)methyl group, (2,6-dimethylphenyl)methyl group, (3,4-dimethylphenyl)methyl group, (4,6-dimethylphenyl)methyl group, (2,3,4-timethylphenyl)methyl group, (2,3,5-timethylphenyl)methyl group, (2,3,6-timethylphenyl)methyl group, (3,4,5-timethylphenyl)methyl group, (2,4,6-timethylphenyl)methyl group, (2,3,4,5-tetramethylphenyl)methyl group, (2,3,4,6-tetramethylphenyl)methyl group, (2,3,5,6-tetramethylphenyl)methyl group, (pentamethylphenyl)methyl group, (ethylphenyl)methyl group, (n-propylphenyl)methyl group, (isopropylphenyl)methyl group, (n-butylphenyl)methyl group, (sec-butylphenyl)methyl group, (tert-butylphenyl)methyl group, (n-pentylphenyl)methyl group, (neopentylphenyl)methyl group, (n-hexylphenyl)methyl group, (n-octylphenyl)methyl group, (n-decylphenyl)methyl group, (n-dodecylphenyl)methyl group, (n-tetradecylphenyl)methyl group, naphthylmethyl group, anthracenylmethyl group, etc., more preferably a benzyl group.

All of these aralkyl groups may be partially substituted with a halogen atom (fluorine atom, chlorine atom, bromine atom or iodine atom), an alkoxy group such as a methoxy group, ethoxy group, etc., an aryloxy group such as a phenoxy group, etc. or an aralkyloxy group such as a benzyloxy group, etc.

As the aryl group in the substituent $X^1$, $X^2$, $R^1$, $R^2$, $R^3$, $R^4$, $R^5$ or $R^6$, an aryl group having 6 to 20 carbon atoms is preferred. Examples thereof include a phenyl group, 2-tolyl group, 3-tolyl group, 4-tolyl group, 2,3-xylyl group, 2,4-xylyl group, 2,5-xylyl group, 2,6-xylyl group, 3,4-xylyl group, 3,5-xylyl group, 2,3,4-trimethylphenyl group, 2,3,5-trimethylphenyl group, 2,3,6-trimethylphenyl group, 2,4,6-trimethylphenyl group, 3,4,5-trimethylphenyl group, 2,3,4,5-tetramethylphenyl group, 2,3,4,6-tetramethylphenyl group, 2,3,5,6-tetramethylphenyl group, pentamethylphenyl group, ethylphenyl group, n-propylphenyl group, isopropylphenyl group, n-butylphenyl group, sec-butylphenyl group, tert-butylphenyl group, n-pentylphenyl group, neopentylphenyl group, n-hexylphenyl group, n-octylphenyl group, n-decylphenyl group, n-dodecylphenyl group, n-tetradecylphenyl group, naphthyl group, anthracenyl group, etc., more preferably a phenyl group.

All of these aryl groups may be partially substituted with a halogen atom (fluorine atom, chlorine atom, bromine atom or iodine atom), an alkoxy group such as a methoxy group, ethoxy group, etc., an aryloxy group such as a phenoxy group, etc. or an aralkyloxy group such as a benzyloxy group, etc.

The substituted silyl group in the substituent $X^1$, $X^2$, $R^1$, $R^2$, $R^3$, $R^4$, $R^5$ or $R^6$ is a silyl group substituted with a hydrocarbon group, and examples of the hydrocarbon group include an alkyl group having 1 to 10 carbon atoms, such as a methyl group, ethyl group, n-propyl group, isopropyl group, n-butyl group, sec-butyl group, tert-butyl group, isobutyl group, n-pentyl group, n-hexyl group, cyclohexyl group, etc., and an aryl group such as a phenyl group. Examples of the substituted silyl group having 1 to 20 carbon atoms include mono-substituted silyl group having 1 to 20 carbon atoms, such as methylsilyl group, ethylsilyl group, phenylsilyl group, etc.; di-substituted silyl group having 2 to 20 carbon atoms, such as a dimethylsilyl group, diethylsilyl group, diphenylsilyl group, etc.; and tri-substituted silyl group having 3 to 20 carbon atoms, such as a trimethylsilyl group, triethylsilyl group, tri-n-propylsilyl group, triisopropylsilyl group, tri-n-butylsilyl group, tri-sec-butylsilyl group, tri-tert-butylsilyl group, tri-isobutylsilyl group, tert-butyldimethylsilyl group, tri-n-pentylsilyl group, tri-n-hexylsilyl group, tricyclohexylsilyl group, triphenylsilyl group, etc., preferably a trimethylsilyl group, tert-butyldimethylsilyl group or triphenylsilyl group.

All of the hydrocarbon groups of these substituted silyl groups may be partially substituted with a halogen atom (fluorine atom, chlorine atom, bromine atom or iodine atom), an alkoxy group such as a methoxy group, ethoxy group, etc., an aryloxy group such as phenoxy group, etc. or an aralkyloxy group such as benzyloxy group, etc.

As the alkoxy group in the substituent $X^1$, $X^2$, $R^1$, $R^2$, $R^3$, $R^4$, $R^5$ or $R^6$, an alkoxy group having 1 to 20 carbon atoms is preferred. Examples thereof include a methoxy group, ethoxy group, n-propoxy group, isopropoxy group, n-butoxy group, sec-butoxy group, tert-butoxy group, n-pentoxy group, neopentoxy group, n-hexoxy group, n-octoxy group, n-dodecoxy group, n-pentadecoxy group, n-eicosoxy group, etc., more preferably a methoxy group, ethoxy group or tert-butoxy group.

All of these alkoxy groups may be partially substituted with a halogen atom (fluorine atom, chlorine atom, bromine atom or iodine atom), an alkoxy group such as a methoxy group, ethoxy group, etc., an aryloxy group such as a phenoxy group, etc. or an aralkyloxy group such as a benzyloxy group, etc.

As the aralkyloxy group in the substituent $X^1$, $X^2$, $R^1$, $R^2$, $R^3$, $R^4$, $R^5$ or $R^6$, an aralkyloxy group having 7 to 20 carbon atoms is preferred. Examples thereof include a benzyloxy group, (2-methylphenyl)methoxy group, (3-methylphenyl)methoxy group, (4-methylphenyl)methoxy group, (2,3-dimethylphenyl)methoxy group, (2,4-dimethylphenyl)methoxy group, (2,5-dimethylphenyl)methoxy group, (2,6-dimethylphenyl)methoxy group, (3,4-dimethylphenyl)methoxy group, (3,5-dimethylphenyl)methoxy group, (2,3,4-trimethylphenyl)methoxy group, (2,3,5-trimethylphenyl)methoxy group, (2,3,6-trimethylphenyl)methoxy group, (2,4,5-trimethylphenyl)methoxy group, (2,4,6-trimethylphenyl)methoxy group, (3,4,5-trimethylphenyl)methoxy group, (2,3,4,5-tetramethylphenyl)methoxy group, (2,3,4,6-tetramethylphenyl)methoxy group, (2,3,5,6-tetramethylphenyl)methoxy group, (pentamethylphenyl)methoxy group, (ethylphenyl)methoxy group, (n-propylphenyl)methoxy group, (isopropylphenyl)methoxy group, (n-butylphenyl)methoxy group, (sec-butylphenyl)methoxy group, (tert-butylphenyl)methoxy group, (n-hexylphenyl)methoxy group, (n-octylphenyl)methoxy group, (n-decylphenyl)methoxy group, (n-tetradecylphenyl)methoxy group, naphthylmethoxy group, anthracenylmethoxy group, etc., more preferably a benzyloxy group.

All of these aralkyloxy groups may be partially substituted with a halogen atom (fluorine atom, chlorine atom, bromine atom or iodine atom), an alkoxy group such as a methoxy group, ethoxy group, etc., an aryloxy group such as a phenoxy group, etc. or an aralkyloxy group such as a benzyloxy group, etc.

As the aryloxy group in the substituent $X^1$, $X^2$, $R^1$, $R^2$, $R^3$, $R^4$, $R^5$ or $R^6$, an aralkyloxy group having 6 to 20 carbon atoms is preferred. Examples thereof include a phenoxy group, 2-methylphenoxy group, 3-methylphenoxy group, 4-methylphenoxy group, 2,3-dimethylphenoxy group, 2,4-dimethylphenoxy group, 2,5-dimethylphenoxy group, 2,6-dimethylphenoxy group, 3,4-dimethylphenoxy group, 3,5-dimethylphenoxy group, 2,3,4-trimethylphenoxy group,

2,3,5-trimethylphenoxy group, 2,3,6-trimethylphenoxy group, 2,4,5-trimethylphenoxy group, 2,4,6-trimethylphenoxy group, 3,4,5-trimethylphenoxy group, 2,3,4,5-tetramethylphenoxy group, 2,3,4,6-tetramethylphenoxy group, 2,3,5,6-tetramethylphenoxy group, pentamethylphenoxy group, ethylphenoxy group, n-propylphenoxy group, isopropylphenoxy group, n-butylphenoxy group, sec-butylphenoxy group, tert-butylphenoxy group, n-hexylphenoxy group, n-octylphenoxy group, n-decylphenoxy group, n-tetradecylphenoxy group, naphthoxy group, anthracenoxy group, etc.

All of these aryloxy groups may be partially substituted with a halogen atom (fluorine atom, chlorine atom, bromine atom or iodine atom), an alkoxy group such as a methoxy group, ethoxy group, etc., an aryloxy group such as a phenoxy group, etc. or an aralkyloxy group such as a benzyloxy group, etc.

The di-substituted amino group in the substituent $X^1$, $X^2$, $R^1$, $R^2$, $R^3$, $R^4$, $R^5$ or $R^6$ is an amino group substituted with two hydrocarbon groups, and examples of the hydrocarbon group include alkyl group having 1 to 10 carbon atoms, such as a methyl group, ethyl group, n-propyl group, isopropyl group, n-butyl group, sec-butyl group, tert-butyl group, isobutyl group, n-pentyl group, n-hexyl group, cyclohexyl group, etc.; aryl group having 6 to 10 carbon atoms, such as phenyl group, etc.; and aralkyl group having 7 to 10 carbon atoms. Examples of the di-substituted amino group substituted with the hydrocarbon group having 1 to 10 carbon atoms include dimethylamino group, diethylamino group, di-n-propylamino group, diisopropylamino group, di-n-butylamino group, di-sec-butylamino group, di-tert-butylamino group, di-isobutylamino group, tert-butylisopropylamino group, di-n-hexylamino group, di-n-octylamino group, di-n-decylamino group, diphenylamino group, bistrimethylsilylamino group, bis-tert-butyldimethylsilylamino group, etc., preferably a dimethylamino group or diethylamino group.

The substituent $R^1$, $R^2$, $R^3$, $R^4$, $R^5$ and $R^6$ may be optionally combined with each other to form a ring.

$R^1$ is preferably an alkyl group, an aralkyl group, an aryl group or a substituted silyl group.

Preferably, each of $X^1$ and $X^2$ is independently a halogen atom, an alkyl group, an aralkyl group, an alkoxy group, an aryloxy group or a di-substituted amino group, more preferably halogen atom.

Examples of the transition metal complex (A) represented by the formula [I] include transition metal complexes wherein J is a carbon atom in the general formula [I], such as methylene(cyclopentadienyl)(3,5-dimethyl-2-phenoxy)titanium dichloride, methylene(cyclopentadienyl)(3-tert-butyl-2-phenoxy)titanium dichloride, methylene-(cyclopentadienyl)(3-tert-butyl-5-methyl-2-phenoxy)titanium dichloride, methylene(cyclopentadienyl)(3-phenyl-2-phenoxy)titanium dichloride, methylene(cyclopentadienyl)(3-tert-butyldimethylsilyl-5-methyl-2-phenoxy)titanium dichloride, methylene(cyclopentadienyl)(3-trimethylsilyl-5-methyl-2-phenoxy)titanium dichloride, methylene(cyclopentadienyl)(3-tert-butyl-5-methoxy-2-phenoxy)titanium dichloride, methylene(cyclopentadienyl)(3-tert-butyl-5-chloro-2-phenoxy)titanium dichloride, methylene(methylcyclopentadienyl)(3,5-dimethyl-2-phenoxy)titanium dichloride, methylene(methylcyclopentadienyl)(3-tert-butyl-2-phenoxy)titanium dichloride, methylene(methylcyclopentadienyl)(3-tert-butyl-5-methyl-2-phenoxy)titanium dichloride, methylene(methylcyclopentadienyl)(3-phenyl-2-phenoxy)titanium dichloride, methylene(methylcyclopentadienyl)(3-tert-butyldimethylsilyl-5-methyl-2-phenoxy)titanium dichloride, methylene(methylcyclopentadienyl)(3-trimethylsilyl-5-methyl-2-phenoxy)titanium dichloride, methylene(methylcyclopentadienyl)(3-tert-butyl-5-methoxy-2-phenoxy)titanium dichloride, methylene(methylcyclopentadienyl)(3-tert-butyl-5-chloro-2-phenoxy)titanium dichloride, methylene(tert-butylcyclopentadienyl)(3,5-dimethyl-2-phenoxy)titanium dichloride, methylene(tert-butylcyclopentadienyl)(3-tert-butyl-2-phenoxy)titanium dichloride, methylene(tert-butylcyclopentadienyl)(3-tert-butyl-5-methyl-2-phenoxy)titanium dichloride, methylene(tert-butylcyclopentadienyl)(3-phenyl-2-phenoxy)titanium dichloride, methylene(tert-butylcyclopentadienyl)(3-tert-butyldimethylsilyl-5-methyl-2-phenoxy)titanium dichloride, methylene(tert-butylcyclopentadienyl)(3-trimethylsilyl-5-methyl-2-phenoxy)titanium dichloride, methylene(tert-butylcyclopentadienyl)(3-tert-butyl-5-methoxy-2-phenoxy)titanium dichloride, methylene(tert-butylcyclopentadienyl)(3-tert-butyl-5-chloro-2-phenoxy)titanium dichloride, methylene(tetramethylcyclopentadienyl)(3,5-dimethyl-2-phenoxy)titanium dichloride, methylene(tetramethylcyclopentadienyl)(3-tert-butyl-2-phenoxy)titanium dichloride, methylene(tetramethylcyclopentadienyl)(3-tert-butyl-5-methyl-2-phenoxy)titanium dichloride, methylene(tetramethylcyclopentadienyl)(3-phenyl-2-phenoxy)titanium dichloride, methylene(tetramethylcyclopentadienyl)(3-tert-butyldimethylsilyl-5-methyl-2-phenoxy)titanium dichloride, methylene(tetramethylcyclopentadienyl)(3-trimethylsilyl-5-methyl-2-phenoxy)titanium dichloride, methylene(tetramethylcyclopentadienyl)(3-tert-butyl-5-methoxy-2-phenoxy)titanium dichloride, methylene(tetramethylcyclopentadienyl)(3-tert-butyl-5-chloro-2-phenoxy)titanium dichloride, methylene(trimethylsilylcyclopentadienyl)(3,5-dimethyl-2-phenoxy)titanium dichloride, methylene(trimethylsilylcyclopentadienyl)(3-tert-butyl-2-phenoxy)titanium dichloride, methylene(trimethylsilylcyclopentadienyl)(3-tert-butyl-5-methyl-2-phenoxy)titanium dichloride, methylene(trimethylsilylcyclopentadienyl)(3-phenyl-2-phenoxy)titanium dichloride, methylene(trimethylsilylcyclopentadienyl)(3-tert-butyldimethylsilyl-5-methyl-2-phenoxy)titanium dichloride, methylene(trimethylsilylcyclopentadienyl)(3-trimethylsilyl-5-methyl-2-phenoxy)titanium dichloride, methylene(trimethylsilylcyclopentadienyl)(3-tert-butyl-5-methoxy-2-phenoxy)titanium dichloride, methylene(trimethylsilylcyclopentadienyl)(3-tert-butyl-5-chloro-2-phenoxy)titanium dichloride, methylene(fluorenyl)(3,5-dimethyl-2-phenoxy)titanium dichloride, methylene(fluorenyl)(3-tert-butyl-2-phenoxy)titanium dichloride, methylene(fluorenyl)(3-tert-butyl-5-methyl-2-phenoxy)titanium dichloride, methylene(fluorenyl)(3-phenyl-2-phenoxy)titanium dichloride, methylene(fluorenyl)(3-tert-butyldimethylsilyl-5-methyl-2-phenoxy)titanium dichloride, methylene(fluorenyl)(3-trimethylsilyl-5-methyl-2-phenoxy)titanium dichloride, methylene(fluorenyl)(3-tert-butyl-5-methoxy-2-phenoxy)titanium dichloride, methylene(fluorenyl)(3-tert-butyl-5-chloro-2-phenoxy)titanium dichloride, isopropylidene(cyclopentadienyl)(3,5-dimethyl-2-phenoxy)titanium dichloride, isopropylidene(cyclopentadienyl)(3-tert-butyl-2-phenoxy)titanium dichloride, isopropylidene(cyclopentadienyl)(3-tert-butyl-5-methyl-2-phenoxy)titanium dichloride, isopropylidene(cyclopentadienyl)(3-phenyl-2-phenoxy)titanium dichloride, isopropylidene(cyclopentadienyl)(3-tert-butyldimethylsilyl-5-methyl-2-phenoxy)titanium dichloride, isopropylidene(cyclopentadienyl)(3-trimethylsilyl-5-methyl-2-phenoxy)titanium dichloride, isopropylidene(cyclopentadienyl)(3-tert-butyl-5-methoxy-2-phenoxy)titanium dichloride, isopropylidene(cyclopentadienyl)(3-tert-butyl-5-chloro-2-phenoxy)titanium dichloride, isopropylidene(methylcyclopentadienyl)(3,5-dimethyl-2-phenoxy)titanium dichloride, isopropylidene(methylcyclopentadienyl)(3-tert-butyl-2-phenoxy)titanium dichloride, isopropylidene(methylcyclopentadienyl)(3-tert-butyl-5-methyl-2-phenoxy)titanium dichloride, isopropylidene(methylcyclopentadienyl)(3-phenyl-2-phenoxy)titanium dichloride, isopropylidene(methylcyclopentadienyl)(3-tert-butyldimethylsilyl-5-methyl-2-phenoxy)titanium dichloride, isopropylidene(methylcyclopentadienyl)(3-trimethylsilyl-5-methyl-2-phenoxy)titanium dichloride, isopropylidene(methylcyclopentadienyl)(3-tert-butyl-5-methoxy-2-phenoxy)titanium dichloride, isopropylidene(methylcyclopentadienyl)(3-tert-butyl-5-chloro-2-phenoxy)titanium dichloride, isopropylidene(tert-butylcyclopentadienyl)(3,5-dimethyl-2-phenoxy)titanium dichloride, isopropylidene(tert-butylcyclopentadienyl)(3-tert-butyl-2-phenoxy)titanium dichloride, isopropylidene(tert-butylcyclopentadienyl)(3-tert-butyl-5-methyl-2-phenoxy)titanium dichloride, isopropylidene(tert-butylcyclopentadienyl)(3-phenyl-2-phenoxy)titanium dichloride, isopropylidene(tert-butylcyclopentadienyl)(3-tert-butyldimethylsilyl-5-methyl-2-phenoxy)titanium dichloride, isopropylidene(tert-butylcyclopentadienyl)(3-trimethylsilyl-5-methyl-2-phenoxy)titanium dichloride, isopropylidene(tert-butylcyclopentadienyl)(3-tert-butyl-5-methoxy-2-phenoxy)titanium dichloride, isopropylidene(tert-butylcyclopentadienyl)(3-tert-butyl-5-chloro-2-phenoxy)titanium dichloride, isopropylidene(tetramethylcyclopentadienyl)(3,5-dimethyl-2-phenoxy)titanium dichloride, isopropylidene(tetramethylcyclopentadienyl)(3-tert-butyl-2-phenoxy)titanium dichloride, isopropylidene(tetramethylcyclopentadienyl)(3-tert-butyl-5-methyl-2-phenoxy)titanium dichloride, isopropylidene(tetramethylcyclopentadienyl)(3-phenyl-2-phenoxy)titanium dichloride, isopropylidene(tetramethylcyclopentadienyl)(3-tert-butyldimethylsilyl-5-methyl-2-phenoxy)titanium dichloride, isopropylidene(tetramethylcyclopentadienyl)(3-trimethylsilyl-5-methyl-2-phenoxy)titanium dichloride, isopropylidene(tetramethylcyclopentadienyl)(3-tert-butyl-5-methoxy-2-phenoxy)titanium dichloride, isopropylidene(tetramethylcyclopentadienyl)(3-tert-butyl-5-chloro-2-phenoxy)titanium dichloride, isopropylidene(trimethylsilylcyclopentadienyl)(3,5-dimethyl-2-phenoxy)titanium dichloride, isopropylidene(trimethylsilylcyclopentadienyl)(3-tert-butyl-2-phenoxy)titanium dichloride, isopropylidene(trimethylsilylcyclopentadienyl)(3-tert-butyl-5-methyl-2-phenoxy)titanium dichloride, isopropylidene(trimethylsilylcyclopentadienyl)(3-phenyl-2-phenoxy)titanium dichloride, isopropylidene(trimethylsilylcyclopentadienyl)(3-tert-butyldimethylsilyl-5-methyl-2-phenoxy)titanium dichloride, isopropylidene(trimethylsilylcyclopentadienyl)(3-trimethylsilyl-5-methyl-2-phenoxy)titanium dichloride, isopropylidene(trimethylsilylcyclopentadienyl)(3-tert-butyl-5-methoxy-2-phenoxy)titanium dichloride, isopropylidene(trimethylsilylcyclopentadienyl)(3-tert-butyl-5-chloro-2-phenoxy)titanium dichloride, isopropylidene(fluorenyl)(3,5-dimethyl-2-phenoxy)titanium dichloride, isopropylidene(fluorenyl)(3-tert-butyl-2-phenoxy)titanium dichloride, isopropylidene(fluorenyl)(3-tert-butyl-5-methyl-2-phenoxy)titanium dichloride, isopropylidene(fluorenyl)(3-phenyl-2-phenoxy)titanium dichloride, isopropylidene(fluorenyl)(3-tert-butyldimethylsilyl-5-methyl-2-phenoxy)titanium dichloride, isopropylidene(fluorenyl)(3-trimethylsilyl-5-methyl-2-phenoxy)titanium dichloride, isopropylidene(fluorenyl)(3-tert-butyl-5-methoxy-2-phenoxy)titanium dichloride, isopropylidene(fluorenyl)(3-tert-butyl-5-chloro-2-phenoxy)titanium dichloride, diphenylmethylene(cyclopentadienyl)(3,5-dimethyl-2-phenoxy)titanium dichloride, diphenylmethylene(cyclopentadienyl)(3-tert-butyl-2-phenoxy)titanium dichloride, diphenylmethylene(cyclopentadienyl)(3-tert-butyl-5-methyl-2-phenoxy)titanium dichloride, diphenylmethylene(cyclopentadienyl)(3-phenyl-2-phenoxy)titanium dichloride, diphenylmethylene(cyclopentadienyl)(3-tert-butyldimethylsilyl-5-methyl-2-phenoxy)titanium dichloride, diphenylmethylene(cyclopentadienyl)(3-trimethylsilyl-5-methyl-2-phenoxy)titanium dichloride, diphenylmethylene(cyclopentadienyl)(3-tert-butyl-5-methoxy-2-phenoxy)titanium dichloride, diphenylmethylene(cyclopentadienyl)(3-tert-butyl-5-chloro-2-phenoxy)titanium dichloride, diphenylmethylene(methylcyclopentadienyl)(3,5-dimethyl-2-phenoxy)titanium dichloride, diphenylmethylene(methylcyclopentadienyl)(3-tert-butyl-2-phenoxy)titanium dichloride, diphenylmethylene(methylcyclopentadienyl)(3-tert-butyl-5-methyl-2-phenoxy)titanium dichloride, diphenylmethylene(methylcyclopentadienyl)(3-phenyl-2-phenoxy)titanium dichloride, diphenylmethylene(methylcyclopentadienyl)(3-tert-butyldimethylsilyl-5-methyl-2-phenoxy)titanium dichloride, diphenylmethylene(methylcyclopentadienyl)(3-trimethylsilyl-5-methyl-2-phenoxy)titanium dichloride, diphenylmethylene(methylcyclopentadienyl)(3-tert-butyl-5-methoxy-2-phenoxy)titanium dichloride, diphenylmethylene(methylcyclopentadienyl)(3-tert-butyl-5-chloro-2-phenoxy)titanium dichloride, diphenylmethylene(tert-butylcyclopentadienyl)(3,5-dimethyl-2-phenoxy)titanium dichloride, diphenylmethylene(tert-butylcyclopentadienyl)(3-tert-butyl-2-phenoxy)titanium dichloride, diphenylmethylene(tert-butylcyclopentadienyl)(3-tert-butyl-5-methyl-2-phanoxy)titanium dichloride, diphenylmethylene(tert-butylcyclopentadienyl)(3-phenyl-2-phenoxy)titanium dichloride, diphenylmethylene(tert-butylcyclopentadienyl)(3-tert-butyldimethylsilyl-5-methyl-2-phenoxy)titanium dichloride, diphenylmethylene(tert-butylcyclopentadienyl)(3-trimethylsilyl-5-methyl-2-phenoxy)titanium dichloride, diphenylmethylene(tert-butylcyclopentadienyl)(3-tert-butyl-5-methoxy-2-phenoxy)titanium dichloride, diphenylmethylene(tert-butylcyclopentadienyl)(3-tert-butyl-5-chloro-2-phenoxy)titanium dichloride, diphenylmethylene(tetramethylcyclopentadienyl)(3,5-dimethyl-2-phenoxy)titanium dichloride, diphenylmethylene(tetramethylcyclopentadienyl)(3-tert-butyl-2-phenoxy)titanium dichloride, diphenylmethylene(tetramethylcyclopentadienyl)(3-tert-butyl-5-methyl-2-phenoxy)titanium dichloride, diphenylmethylene-(tetramethylcyclopentadienyl)(3-phenyl-2-phenoxy)titanium dichloride, diphenylmethylene(tetramethylcyclopentadienyl)(3-tert-butyldimethylsilyl-5-methyl-2-phenoxy)titanium dichloride, diphenylmethylene(tetramethylcyclopentadienyl)(3-trimethylsilyl-5-methyl-2-phenoxy)titanium dichloride, diphenylmethylene(tetramethylcyclopentadienyl)(3-tert-butyl-5-methoxy-2-phenoxy)titanium dichloride, diphenylmethylene(tetramethylcyclopentadienyl)(3-tert-butyl-5-chloro-2-phenoxy)titanium dichloride, diphenylmethylene(trimethylsilylcyclopentadienyl)(3,5-dimethyl-2-phenoxy)titanium dichloride, diphenylmethylene(trimethylsilylcyclopentadienyl)(3-tert-butyl-2-phenoxy)titanium dichloride, diphenylmethylene(trimethylsilylcyclopentadienyl)(3-tert-butyl-5-methyl-2-phenoxy)titanium dichloride, diphenylmethylene(trimethylsilylcyclopentadienyl)(3-phenyl-2-phenoxy)titanium dichloride, diphenylmethylene(trimethylsilylcyclopentadienyl)(3-tert-butyldimethylsilyl-5-methyl-2-phenoxy)titanium dichloride, diphenylmethylene(trimethylsilylcyclopentadienyl)(3-trimethylsilyl-5-methyl-2-phenoxy)titanium dichloride, diphenylmethylene(trimethylsilylcyclopentadienyl)(3-tert-butyl-5-methoxy-2-phenoxy)titanium dichloride, diphenylmethylene(trimethylsilylcyclopentadienyl)(3-tert-butyl-5-chloro-2-phenoxy)titanium dichloride, diphenylmethylene(fluorenyl)(3,5-dimethyl-2-phenoxy)titanium dichloride, diphenylmethylene(fluorenyl)(3-tert-butyl-2-phenoxy)titanium dichloride, diphenylmethylene(fluorenyl)(3-tert-butyl-5-methyl-2-phenoxy)titanium dichloride, diphenylmethylene(fluorenyl)(3-phenyl-2-phenoxy)titanium dichloride, diphenylmethylene(fluorenyl)(3-tert-butyldimethylsilyl-5-methyl-2-phenoxy)titanium dichloride, diphenylmethylene(fluorenyl)(3-trimethylsilyl-5-methyl-2-phenoxy)titanium dichloride, diphenylmethylene(fluorenyl)(3-tert-butyl-5-methoxy-2-phenoxy)titanium dichloride. diphenylmethylene(fluorenyl)(3-tert-butyl-5-chloro-2-phenoxy)titanium dichloride, compounds wherein titanium of these compounds is replaced by zirconium or hafnium, compounds wherein dichloride of these compounds is replaced by dibromide, diiodide, bis(dimethylamide), bis (diethylamide), di-n-butoxide or diisopropoxide, compounds wherein (cyclopentadienyl) of these compounds is replaced by (dimethylcyclopentadienyl), (trimethylcyclopentadienyl), (n-butylcyclopentadienyl), (tert-butyldimethylsilylcyclopentadienyl) or (indenyl), and compounds wherein (3,5-dimethyl-2-phenoxy) of these compounds is replaced by (2-phenoxy), (3-methyl-2-phenoxy), (3,5-di-tert-butyl-2-phenoxy), (3-phenyl-5-methyl-2-phenoxy), (3-tert-butyldimethylsilyl-2-phenoxy) or (3-trimethylsilyl-2-phenoxy); and transition metal complex wherein J is an atom of Group XIV of the Periodic Table of the Elements other than carbon atom, such as dimethylsilyl (cyclopentadienyl)(2-phenoxy)titanium dichloride, dimethylsilyl(cyclopentadienyl)(3-methyl-2-phenoxy)titanium dichloride, dimethylsilyl(cyclopentadienyl)(3,5-dimethyl-2-phenoxy)titanium dichloride, dimethylsilyl(cyclopentadienyl)(3-tert-butyl-2-phenoxy)titanium dichloride, dimethylsilyl(cyclopentadienyl)(3-tert-butyl-5-methyl-2-phenoxy)titanium dichloride, dimethylsilyl(cyclopentadienyl)(3,5-di-tert-butyl-2-phenoxy)titanium dichloride, dimethylsilyl(cyclopentadienyl)(5-methyl-3-phenyl-2-phenoxy)titanium dichloride, dimethylsilyl(cyclopentadienyl)(3-tert-butyldimethylsilyl-5-methyl-2-phenoxy)titanium dichloride, dimethylsilyl(cyclopentadienyl)(5-methyl-3-trimethylsilyl-2-phenoxy)titanium dichloride, dimethylsilyl(cyclopentadienyl)(3-tert-butyl-5-methoxy-2-phenoxy)titanium dichloride, dimethylsilyl(cyclopentadienyl)(3-tert-butyl-5-chloro-2-phenoxy)titanium dichloride, dimethylsilyl(cyclopentadienyl)(3,5-diamyl-2-phenoxy)titanium dichloride, dimethylsilyl(methylcyclopentadienyl)(2-phenoxy)titanium dichloride, dimethylsilyl(methylcyclopentadienyl)(3-methyl-2-phenoxy)titanium dichloride, dimethylsilyl(methylcyclopentadienyl)(3,5-dimethyl-2-phenoxy)titanium dichloride, dimethylsilyl(methylcyclopentadienyl)(3-tert-butyl-2-phenoxy)titanium dichloride, dimethylsilyl(methylcyclopentadienyl)(3-tert-butyl-5-methyl-2-phenoxy)titanium dichloride, dimethylsilyl(methylcyclopentadienyl)(3,5-di-tert-butyl-2-phenoxy)titanium dichloride, dimethylsilyl(methylcyclopentadienyl)(5-methyl-3-phenyl-2-phenoxy)titanium dichloride, dimethylsilyl(methylcyclopentadienyl)(3-tert-butyldimethylsilyl-5-methyl-2-phenoxy)titanium dichloride, dimethylsilyl(methylcyclopentadienyl)(5-methyl-3-trimethylsilyl-2-phenoxy)titanium dichloride, dimethylsilyl(methylcyclopentadienyl)(3-tert-butyl-5-methoxy-2-phenoxy)titanium dichloride, dimethylsilyl(methylcyclopentadienyl)(3-tert-butyl-5-chloro-2-phenoxy)titanium dichloride, dimethylsilyl(methylcyclopentadienyl)(3,5-diamyl-2-phenoxy)titanium dichloride, dimethylsilyl(n-butylcyclopentadienyl)(2-phenoxy)titanium dichloride, dimethylsilyl(n-butylcyclopentadienyl)(3-methyl-2-phenoxy) titanium dichloride, dimethylsilyl(n-butylcyclopentadienyl)(3,5-dimethyl-2-phenoxy)titanium dichloride, dimethylsilyl(n-butylcyclopentadienyl)(3-tert-butyl-2-phenoxy)titanium dichloride, dimethylsilyl(n-butylcyclopentadienyl)(3-tert-butyl-5-methyl-2-phenoxy)titanium dichloride, dimethylsilyl(n-butylcyclopentadienyl)(3,5-di-tert-butyl-2-phenoxy)titanium dichloride, dimethylsilyl(n-butylcyclopentadienyl)(5-methyl-3-phenyl-2-phenoxy)titanium dichloride, dimethylsilyl(n-butylcyclopentadienyl)(3-tert-butyldimethylsilyl-5-methyl-2-phenoxy)titanium dichloride, dimethylsilyl(n-butylcyclopentadienyl)(5-methyl-3-trimethylsilyl-2-phenoxy)titanium dichloride, dimethylsilyl(n-butylcyclopentadienyl)(3-tert-butyl-5-methoxy-2-phenoxy)titanium dichloride, dimethylsilyl(n-butylcyclopentadienyl)(3-tert-butyl-5-chloro-2-phenoxy)titanium dichloride, dimethylsilyl(n-butylcyclopentadienyl)(3,5-diamyl-2-phenoxy)titanium dichloride, dimethylsilyl(tert-butylcyclopentadienyl)(2-phenoxy)titanium dichloride, dimethylsilyl(tert-butylcyclopentadienyl)(3-methyl-2-phenoxy)titanium dichloride, dimethylsilyl(tert-butylcyclopentadienyl)(3,5-dimethyl-2-phenoxy)titanium dichloride, dimethylsilyl(tert-butylcyclopentadienyl)(3-tert-butyl-2-phenoxy)titanium dichloride, dimethylsilyl(tert-butylcyclopentadienyl)(3-tert-butyl-5-methyl-2-phenoxy)titanium dichloride, dimethylsilyl(tert-butylcyclopentadienyl)(3,5-di-tert-butyl-2-phenoxy)titanium dichloride, dimethylsilyl(tert-butylcyclopentadienyl)(5-methyl-3-phenyl-2-phenoxy)titanium dichloride, dimethylsilyl(tert-butylcyclopentadienyl)(3-tert-butyldimethylsilyl-5-methyl-2-phenoxy)titanium dichloride, dimethylsilyl(tert-butylcyclopentadienyl)(5-methyl-3-trimethylsilyl-2-phenoxy)titanium dichloride, dimethylsilyl(tert-butylcyclopentadienyl)(3-tert-butyl-5-methoxy-2-phenoxy)titanium dichloride, dimethylsilyl(tert-butylcyclopentadienyl)(3-tert-butyl-5-chloro-2-phenoxy)titanium dichloride, dimethylsilyl(tert-butylcyclopentadienyl)(3,5-diamyl-2-phenoxy)titanium dichloride, dimethylsilyl(tetramethylcyclopentadienyl)(2-phenoxy)titanium dichloride, dimethylsilyl(tetramethylcyclopentadienyl)(3-methyl-2-phenoxy)titanium dichloride, dimethylsilyl(tetramethylcyclopentadienyl)(3,5-dimethyl-2-phenoxy)titanium dichloride, dimethylsilyl(tetramethylcyclopentadienyl)(3-tert-butyl-2-phenoxy)titanium dichloride, dimethylsilyl(tetramethylcyclopentadienyl)(3-tert-butyl-5-methyl-2-phenoxy)titanium dichloride, dimethylsilyl(tetramethylcyclopentadienyl)(3,5-di-tert-butyl-2-phenoxy)titanium dichloride, dimethylsilyl(tetramethylcyclopentadienyl)(5-methyl-3-phenyl-2-phenoxy)titanium dichloride, dimethylsilyl(tetramethylcyclopentadienyl)(3-tert-butyldimethylsilyl-5-methyl-2-phenoxy)titanium dichloride, dimethylsilyl(tetramethylcyclopentadienyl)(5-methyl-3-trimethylsilyl-2-phenoxy)titanium dichloride, dimethylsilyl(tetramethylcyclopentadienyl)(3-tert-butyl-5-methoxy-2-phenoxy)titanium dichloride, dimethylsilyl(tetramethylcyclopentadienyl)(3-tert-butyl-5-chloro-2-phenoxy)titanium dichloride, dimethylsilyl(tetramethylcyclopentadienyl)(3,5-diamyl-2-phenoxy)titanium dichloride, dimethylsilyl(trimethylsilylcyclopentadienyl)(2-phenoxy)titanium dichloride, dimethylsilyl(trimethylsilylcyclopentadienyl)(3-methyl-2-phenoxy)titanium dichloride, dimethylsilyl(trimethylsilylcyclopentadienyl)(3,5-dimethyl-2-phenoxy)titanium dichloride, dimethylsilyl(trimethylsilylcyclopentadienyl)(3-tert-butyl-2-phenoxy)titanium dichloride, dimethylsilyl(trimethylsilylcyclopentadienyl)(3-tert-butyl-5-methyl-2-phenoxy)titanium dichloride, dimethylsilyl(trimethylsilylcyclopentadienyl)(3,5-di-tert-butyl-2-phenoxy)titanium dichloride, dimethylsilyl(trimethylsilylcyclopentadienyl)(5-methyl-3-phenyl-2-phenoxy)titanium dichloride, dimethylsilyl(trimethylsilylcyclopentadienyl)(3-tert-butyldimethylsilyl-5-methyl-2-phenoxy)titanium dichloride, dimethylsilyl(trimethylsilylcyclopentadienyl)(5-methyl-3-trimethylsilyl-2-phenoxy)titanium dichloride, dimethylsilyl(trimethylsilylcyclopentadienyl)(3-tert-butyl-5-methoxy-2-phenoxy)titanium dichloride, dimethylsilyl(trimethylsilylcyclopentadienyl)(3-tert-butyl-5-chloro-2-phenoxy)titanium dichloride, dimethylsilyl(trimethylsilylcyclopentadienyl)(3,5-diamyl-2-phenoxy)titanium dichloride, dimethylsilyl(indenyl)(2-phenoxy)titanium dichloride, dimethylsilyl(indenyl)(3-methyl-2-phenoxy)titanium dichloride, dimethylsilyl(indenyl)(3,5-dimethyl-2-phenoxy)titanium dichloride, dimethylsilyl(indenyl)(3-tert-butyl-2-phenoxy)titanium dichloride, dimethylsilyl(indenyl)(3-tert-butyl-5-methyl-2-phenoxy)titanium dichloride, dimethylsilyl(indenyl)(3,5-di-tert-butyl-2-phenoxy)titanium dichloride, dimethylsilyl(indenyl)(5-methyl-3-phenyl-2-phenoxy)titanium dichloride, dimethylsilyl(indenyl)(3-tert-butyldimethylsilyl-5-methyl-2-phenoxy)titanium dichloride, dimethylsilyl(indenyl)(5-methyl-3-trimethylsilyl-2-phenoxy)titanium dichloride, dimethylsilyl(indenyl)(3-tert-butyl-5-methoxy-2-phenoxy)titanium dichloride, dimethylsilyl(indenyl)(3-tert-butyl-5-chloro-2-phenoxy)titanium dichloride, dimethylsilyl(indenyl)(3,5-diamyl-2-phenoxy)titanium dichloride, dimethylsilyl(fluorenyl)(2-phenoxy)titanium dichloride, dimethylsilyl(fluorenyl)(3-methyl-2-phenoxy)titanium dichloride, dimethylsilyl(fluorenyl)(3,5-dimethyl-2-phenoxy)titanium dichloride, dimethylsilyl(fluorenyl)(3-tert-butyl-2-phenoxy)titanium dichloride, dimethylsilyl(fluorenyl)(3-tert-butyl-5-methyl-2-phenoxy)titanium dichloride, dimethylsilyl(fluorenyl)(3,5-di-tert-butyl-2-phenoxy)titanium dichloride, dimethylsilyl(fluorenyl)(5-methyl-3-phenyl-2-phenoxy)titanium dichloride, dimethylsilyl(fluorenyl)(3-tert-butyldimethylsilyl-5-methyl-2-phenoxy)titanium dichloride, dimethylsilyl(fluorenyl)(5-methyl-3-trimethylsilyl-2-phenoxy)titanium dichloride, dimethylsilyl(fluorenyl)(3-tert-butyl-5-methoxy-2-phenoxy)titanium dichloride, dimethylsilyl(fluorenyl)(3-tert-butyl-5-chloro-2-phenoxy)titanium dichloride, dimethylsilyl(fluorenyl)(3,5-diamyl-2-phenoxy)titanium dichloride, dimethylsilyl(tetramethylcyclopentadienyl)(1-naphthox-2-yl)titanium dichloride, compounds wherein (cyclopentadienyl) of these compounds is replaced by (dimethylcyclopentadienyl), (trimethylcyclopentadienyl), (ethylcyclopentadienyl), (n-propylcyclopentadienyl), (isopropylcyclopentadienyl), (sec-butylcyclopentadienyl), (isobutylcyclopentadienyl), (tert-butyldimethylsilylcyclopentadienyl), (phenylcyclopentadienyl), (methylindenyl) or (phenylindenyl), compounds wherein (2-phenoxy) of these compounds is replaced by (3-phenyl-2-phenoxy), (3-trimethylsilyl-2-phenoxy) or (3-tert-butyldimethylsilyl-2-phenoxy), compounds wherein dimethylsilyl of these compounds is replaced by diethylsilyl, diphenylsilyl or dimethoxysilyl, compounds wherein titanium of these compounds is replaced by zirconium or hafnium, and compound wherein dichloride of these compounds is replaced by dibromide, diiodide, bis(dimethylamide), bis(diethylamide), di-n-butoxide or diisopropoxide.

The transition metal complex represented by the above general formula [I] can be synthesized, for example, by the following method.

That is, a compound having a structure that a group having a cyclopentadienyl skeleton and a group having an alkoxybenzene skeleton are combined via an atom of Group XIV is obtained by reacting an alkoxybenzene compound whose ortho-position is halogenated with a cyclopentadiene compound substituted with a halogenated atom of Group XIV in the presence of an organoalkalinemetal or a metallic magnesium. Then, a transition metal complex represented by the above general formula [I] can be synthesized by treating the compound with a base, and reacting with a transition metal halide, a transition metal hydrocarbon compound or transition metal hydrocarbonoxy compound.

(B) Aluminum compound

The aluminum compound (B) used in the present invention includes publicly known organoaluminum compounds, that is, one or more aluminum compounds selected from (B1) an organoaluminum compound represented by the general formula $E^1{}_dAlZ_{3-d}$, (B2) a cyclic aluminoxane having a structure represented by the general formula $\{-Al(E^2)-O-\}_e$ and (B3) a linear aluminoxane having a structure represented by the general formula $E^3\{-Al(E^3)-O-\}_fAlE^3{}_2$ (wherein $E^1$, $E^2$ and $E^3$ respectively represents a hydrocarbon group, all of $E^1$, $E^2$ and $E^3$ may be the same or different; Z represents a hydrogen atom or a halogen atom, and all of Z may be the same or different; d represents a numeral of 0 to 3; e represents an integer of not less than 2; and f represents an integer of not less than 1). As the hydrocarbon group in $E^1$, $E^2$ or $E^3$, a hydrocarbon group having 1 to 8 carbon atoms is preferred and an alkyl group is more preferred.

Specific examples of the organoaluminum compound (B1) represented by $E^1{}_dAlZ_{3-a}$ include trialkylaluminums such as trimethylaluminum, triethylaluminum, tripropylaluminum, triisobutylaluminum, trihexylaluminum, etc.; dialkylaluminum chlorides such as dimethylaluminum chloride, diethylaluminum chloride, dipropylaluminum chloride, diisobutylaluminum chloride, dihexylaluminum chloride, etc.; alkylaluminum dichlorides such as methylaluminum dichloride, ethylaluminum dichloride, propylaluminum dichloride, isobutylaluminum dichloride, hexylaluminum dichloride, etc.; and dialkylaluminum hydrides such as dimethylaluminum hydride, diethylaluminum hydride, dipropylaluminum hydride, diisobutylaluminum hydride, dihexylaluminum hydride, etc.

Among them, trialkylaluminum is preferred and triethylaluminum or triisobutylaluminum is more preferred.

Specific examples of $E^2$ and $E^3$ in (B2) a cyclic aluminoxane having a structure represented by the general formula $\{-Al(E^2)-O-\}_e$ and (B3) a linear aluminoxane having a structure represented by the general formula $E^3-\{Al(E^3)-O-\}_fAlE^3{}_2$ include alkyl group such as methyl group, ethyl group, n-propyl group, isopropyl group, n-butyl group, isobutyl group, n-pentyl group, neopentyl group, etc. b is an integer of not less than 2, c is an integer of not less than 1. Preferably, each of $E^2$ and $E^3$ is methyl group or isobutyl group, b is from 2 to 40 and c is from 1 to 40.

The above aluminoxane is prepared by various methods. The method is not specifically limited, and the aluminoxane may be prepared according to a publicly known method. For example, the aluminoxane is prepared by contacting a solution obtained by dissolving a trialkylaluminum (e.g. trimethylaluminum) in a suitable organic solvent (e.g. benzene, aliphatic hydrocarbon) with water. Also, there can be illustrated a method for preparing the aluminoxane by contacting a trialkylaluminum (e.g. trimethylaluminum, etc.) with a metal salt containing crystal water (e.g. copper sulfate hydrate, etc.).

(C) Baron compound

As the boron compound (C) in the present invention, there can be used any one of (C1) a boron compound represented by the general formula $BQ^1Q^2Q^3$, (C2) a boron compound represented by the general formula $G^+(BQ^1Q^2Q^3Q^4)^-$ and (C3) a boron compound represented by the general formula $(L-H)^+(BQ^1Q^2Q^3Q^4)^-$.

In the boron compound (C1) represented by the general formula $BQ^1Q^2Q^3$, B represents a boron atom in the trivalent valence state; $Q^1$ to $Q^3$ may be the same or different and represent a halogen atom, a hydrocarbon group, a halogenated hydrocarbon group, a substituted silyl group, an alkoxy group or a di-substituted amino group. Each of $Q^1$ to $Q^3$ is preferably a halogen atom, a hydrocarbon group having 1 to 20 carbon atoms, a halogenated hydrocarbon group having 1 to 20 carbon atoms, a substituted silyl group having 1 to 20 carbon atoms, an alkoxy group having 1 to 20 carbon atoms or an amino group having 2 to 20 carbon atoms, more preferably a hydrocarbon group having 1 to 20 carbon atoms or a halogenated hydrocarbon group having 1 to 20 carbon atoms.

Specific examples of the compound (C1) include tris(pentafluorophenyl)borane, tris(2,3,5,6-tetrafluorophenyl)borane, tris(2,3,4,5-tetrafluorophenyl)borane, tris(3,4,5-trifluorophenyl)borane, tris(2,3,4-trifluorophenyl)borane, phenylbis(pentafluorophenyl)borane, etc., most preferably tris(pentafluorophenyl)borane.

In the boron compound (C2) represented by the general formula $G^+(BQ^1Q^2Q^3Q^4)^-$, $G^+$ represents an inorganic or organic cation; B represents a boron atom in the trivalent valence state; and $Q^1$ to $Q^4$ are as defined in $Q^1$ to $Q^3$.

Specific examples of $G^+$ as an inorganic cation in the compound represented by the general formula $G^+(BQ^1Q^2Q^3Q^4)^-$ include ferrocenium caution, alkyl-substituted ferrocenium cation, silver cation, etc. Examples of the $G^+$ as an organic cation include triphenylmethyl cation. $G^+$ is preferably a carbenium cation, particularly a triphenylmethyl cation. Examples of $(BQ^1Q^2Q^3Q^4)^-$ include tetrakis(pentafluorophenyl)borate, tetrakis( 2,3,5,6-tetrafluorophenyl)borate, tetrakis (2,3,4,5-tetrafluorophenyl)borate, tetrakis(3,4,5-trifluorophenyl)borate, tetrakis(2,2,4-trifluorophenyl)borate, phenyltris(pentafluorophenyl)borate, tetrakis(3,5-bistrifluoromethylphenyl)borate, etc.

Specific combination of them include ferroceniumtetrakis(pentafluorophenyl)borate, 1,1'-dimethylferroceniumtetrakis(pentafluorophenyl)borate, silvertetrakis(pentafluorophenyl)borate, triphenylmethyltetrakis(pentafluorophenyl)borate, triphenylmethyltetrakis(3,5-bistrifluoromethylphenyl)borate, etc., most preferably triphenylmethyltetrakis(pentafluorophenyl)borate.

In the boron compound (C3) represented by the formula $(L\text{-}H)^+(BQ^1Q^2Q^3Q^4)^-$, L represents a neutral Lewis base; $(L\text{-}H)^+$ represents a Brønsted acid; B represents a boron atom in the trivalent valence state; and $Q^1$ to $Q^4$ are as defined in $Q^1$ to $Q^3$.

Specific examples of $(L\text{-}H)^+$ as a Brønsted acid in the compound represented by the formula $(L\text{-}H)^+(BQ^1Q^2Q^3Q^4)^-$ include trialkyl-substituted ammoniums, N,N-dialkylaniliniums, dialkylammoniums, triarylphosphoniums, etc., and examples of $(BQ^1Q^2Q^3Q^4)^-$ include those as defined above.

Specific combination of them include triethylammoniumtetrakis(pentafluorophenyl)borate, tripropylammoniumtetrakis(pentafluorophenyl)borate, tri(n-butyl)ammoniumtetrakis(pentafluorophenyl)borate, tri(n-butyl)ammoniumtetrakis(3,5-bistrifluoromethylphenyl)borate, N,N-dimethylaniliniumtetrakis(pentafluorophenyl)borate, N,N-diethylaniliniumtetrakis(pentafluorophenyl)borate, N,N-2,4,6-pentamethylaniliniumtetrakis (pentafluorophenyl)borate, N,N-dimethylaniliniumtetrakis(3,5-bistrifluoromethylphenyl)borate, diisopropylammoniumtetrakis(pentafluorophenyl)borate, dicyclohexylammoniumtetrakis(pentafluorophenyl)borate, triphenylphosphoniumtetrakis(pentafluorophenyl)borate, tri(methylphenyl)phosphoniumtetrakis(pentafluorophenyl)borate, tri(dimethylphenyl)phosphoniumtetrakis(pentafluorophenyl)borate, etc., most preferably tri(n-butyl) ammoniumtetrakis(pentafluorophenyl)borate or N,N-dimethylanilinumtetrakis(pentafluorophenyl)borate.

In the production of (C1) and (C2) of the present invention, an olefin polymerization catalyst prepared by using a transition metal complex (A) represented by the general formula [I], and [the above (B) and/or (C)] is most suitably used. In case of using an olefin polymerization catalyst prepared from two components (A) and (B), the above cyclic aluminoxane (B2) and/or linear aluminoxane (B3) are preferable as (B). Another preferable embodiment of the olefin polymerization catalyst includes an olefin polymerization catalyst prepared by using the above (A), (B) and (C), and in this case, the above (B1) is easily used as (B).

The respective components are desirably used so that a molar ratio of (B)/(A) is usually within the range from 0.1 to 10000, preferably 5 to 2000 and a molar ratio of (C)/(A) is usually within the range from 0.01 to 100, preferably 0.5 to 10.

When the respective components are used in the state of a solution or state suspended in a solvent, the concentration of the respective components is appropriately selected according to the conditions such as ability of an apparatus for feeding the respective components in a polymerization reactor. The respective components are desirably used so that the concentration of (A) is usually from 0.01 to 500 μmol/g, preferably from 0.05 to 100 μmol/g, more preferably from 0.05 to 50 μmol/g; the concentration of (B) is usually from 0.01 to 10000 μmol/g, preferably from 0.1 to 5000 μmol/g, more preferably from 0.1 to 2000 μmol/g, in terms of Al atom; and the concentration of (C) is usually from 0.01 to 500 μmol/g, preferably from 0.05 to 200 μmol/g, more preferably from 0.05 to 100 μmol/g.

As a polymerization reaction, there can be a solvent polymerization or slurry polymerization in which an aliphatic hydrocarbon such as butane, pentane, hexane, heptane, octane or the like; an aromatic hydrocarbon such as benzene, toluene or the like; or a halogenated hydrocarbon such as methylene dichloride or the like used as a solvent, a gas phase polymerization in a gaseous monomer, or the like. Further, either of a continuous polymerization and a batch-wise polymerization are possible.

The polymerization temperature can be adopted at a range of -50°C to 250°C and -20°C to 100°C in particular is preferable. A polymerization pressure of atmospheric pressure to 60 $kg/cm^2$ G is preferable.

In general, the polymerization time is appropriately determined according to the kind of a catalyst used and a reaction apparatus, and a range of 1 minute to 20 hours can be adopted. Further, a chain transfer agent such as hydrogen or the like can also be added to adjust a molecular weight of a polymer.

The above (A) and [(B) and/or (C)] may be charged to a reactor after previously mixing them, or may be charged through respectively separated injecting pipes thereto and mixed in the reactor. And, in a system of a plurality of reaction zones, they may be charged to the first reaction zone as a whole, or may be divisionally charged to other reaction zone(s).

The olefin-based thermoplastic elastomer of the present invention contains 5 to 93% by weight of (a), 2 to 90% by weight of (b) and 5 to 93% by weight of (c) {provided that (a) + (b) + (c) = 100% by weight}. It contains preferably 10 to 80% by weight of (a), 10 to 80% by weight of (b) and 10 to 80% by weight of (c). When (a) is too little, melt-flowability becomes insufficient, and on the other hand, when (a) is too much, flexibility becomes insufficient. When (b) is too little, low-temperature impact is deteriorated, and on the other hand, when (b) is too much, the melt-flowability becomes insufficient.

When (c) is too little, the flexibility becomes insufficient, and on the other hand, when (c) is too much, the melt-flowability becomes insufficient.

According to requirement, other rubber components such as, for example, a butadiene-based copolymer, an isoprene-based copolymer and a hydrogenated product thereof, a styrene-based thermoplastic elastomer and the like may be added in the olefin-based thermoplastic elastomer composition of the present invention in addition to (a) to (c) of essential components. Moreover, a crosslinking reaction can be carried out by addition of a peroxide, if necessary. Further, antioxidants, thermal stabilizers, ultra-violet rays absorbers, lubricants, anti-static agents, pigments, fillers,

flame retardants, if necessary.

The process of preparing the olefin-based thermoplastic elastomer composition of the present invention includes a process of melt-kneading the respective components by a twin screw extruder, a Banbury mixer and the like.

The olefin-based thermoplastic elastomer composition of the present invention is molded by known process such as an extrusion molding process, an injection molding process, a compression molding process, a blow molding process, a vacuum forming process, a calendering process, or the like.

The olefin-based thermoplastic elastomer composition of the present invention can be most suitably used for automobile parts, industrial instrument parts, electric and electronic parts, building materials, sundries goods and the like. It can be suitably used for interior skins such as an instrument panel, a door, a pillar and the like, an airbag cover, etc. in the automobile parts.

The present invention is illustrated in more detail according to Examples below, but the present invention is not limited to these Examples.

[I] Raw materials

Raw materials shown as follow were used for obtaining the respective compositions of Examples and Comparative Examples.

[a ①]: A block polypropylene having a MI of 65(g/10min.) at 230°C under a load of 2.16kg and containing 17% by weight of an ethylene-propylene random copolymer which has an ethylene content of 40% by weight.
[a ②]: A propylene homopolymer having a MI of 12(g/10min.) at 230°C under a load of 2.16kg.
[a ③]: An ethylene-propylene random copolymer having a MI of 228(g/10min.) at 230°C under a load of 2.16kg and containing 5% by weight of ethylene.
[b1 ①]: A hydrogenated styrene-butadiene-styrene block copolymer (SEBS); CRATON G1657(molecular weight = 80,000, styrene content = 13%) manufactured by Shell Chemical Co., Ltd.
[b2 ①]: An ethylene-propylene copolymer rubber having a Mooney viscosity ($ML_{1+4}$ 121°C) of 33 and a propylene content of 27% by weight.
[b2 ②]: An ethylene-propylene copolymer rubber having a Mooney viscosity ($ML_{1+4}$ 100°C) of 35 and a propylene content of 22% by weight.
[c1 ①]: A propylene-1-butene copolymer (propylene content of 35% by mole, 1-butene content of 9% by mole) having a Shore A hardness measured in accordance with ASTM D2240 of 44 and an intrinsic viscosity [η] measured in xylene of 70°C of 1.01dl/g.
[c2 ①]: A propylene-1-butene-ethylene copolymer (propylene of 35% by mole, 1-butene of 42% by mole, ethylene of 23 % by mole) having a Shore A hardness measured in accordance with ASTM D2240 of 29 and an intrinsic viscosity [η] measured in xylene of 70°C of 0.92dl/g.

[II] Evaluation and measurement methods

Various properties described in Examples and Comparative Examples were measured according to the following methods.

MI: JIS K7112 (temperature of 230°C and load of 2.16kg)
Bending test: JIS K7203

Example 1

With a LABOPLASTOMILL settled at 180°C, 50 parts by weight of the block PP of [a ①], 25 parts by weight of the ethylene-propylene copolymer rubber of [b2 ①], 25 parts by weight of the propylene-butene-1 copolymer of [c1 ①] and 0.1 part by weight of an antioxidant were kneaded at 50 rpm for 5 minutes. A sheet having a thickness of 2mm was prepared from the obtained composition with a press settled at 200°C and the evaluation of physical properties was carried out. The result is shown in Table 1. Both melt-flowability and flexibility are better than Comparative Example 1, and a satisfactory result is indicated.

Example 2 and Comparative Example 1

The same method as in Example 1 except for the compounding prescriptions shown in Table 1 was carried out.

The result is shown in Table 1. Example 2 is better in both melt-flowability and flexibility than Comparative

Example 1, and a satisfactory result is indicated.

Example 3

With a LABOPLASTOMILL settled at 180°C, 50 parts by weight of the block PP of [a ①], 25 parts by weight of the SEBS of [b1 ①], 25 parts by weight of the propylene-butene-ethylene copolymer of [c2 ①] and 0.1 part by weight of an antioxidant were kneaded at 50 rpm for 5 minutes. A sheet having a thickness of 2mm was prepared from the obtained composition with a press settled at 200°C and the evaluation of physical properties was carried out. The result is shown in Table 1. Both melt-flowability and flexibility are better than Comparative Example 2, and a satisfactory result is indicated.

Comparative Example 2

The same method as in Example 3 except for the compounding prescriptions shown in Table 1 was carried out. The result is shown in Table 1.

Example 4

By a Banbury mixer, 30 parts by weight of the PP of [a ①], 70 parts by weight of the ethylene-propylene rubber of [b2 ②], 0.1 part by weight of a crosslinking aid and 0.1 part by weight of an antioxidant were kneaded at 170 to 200°C for 7 minutes, and then a pellet-shaped master batch was prepared. Then, an operation of homogeneously blending 0.04 part by weight of 2,5-dimethyl-2,5-di(t-butylperoxy)hexane per 100 parts by weight of said master batch was carried out for 3 minutes using a Henschel mixer. The dynamic heat treatment of the blend was carried out for about 30 seconds at 240°C to 260°C using a twin screw kneading extruder (TEX-44HC of Nihon Seikousyo Co., Ltd.) to obtain thermoplastic elastomer pellets which are partially crosslinked. With a LABOPLASTOMILL settled at 180°C, 80 parts by weight of the pellets, 20 parts by weight of the propylene-butene-ethylene copolymer of (c2 ①] and 0.1 part by weight of an antioxidant were kneaded at 50 rpm for 5 minutes. A sheet having a thickness of 2mm was prepared from the obtained composition a with a press settled at 200°C and the evaluation of physical properties was carried out. The result is shown in Table 2. Both melt-flowability and flexibility are better than Comparative Example 3, and a satisfactory result is indicated.

Comparative Example 3

The similar method as in Example 4 except for the compounding prescriptions shown in Table 2 was carried out. The result is shown in Table 2.

Example 5

With a LABOPLASTOMILL settled at 180°C, 40 parts by weight of the PP of [a ③], 20 parts by weight of the ethylene-propylene rubber of [b2 ①], 40 parts by weight of the propylene-1-butene copolymer of [c1 ①] and 0.1 part by weight of an antioxidant were kneaded at 50 rpm for 5 minutes. A sheet having a thickness of 2mm was prepared from the obtained composition with a press settled at 200°C and the evaluation of physical properties was carried out. The result is shown in Table 2. Both melt-flowability and flexibility are better than Comparative Example 4, and a satisfactory result is indicated.

Example 6 and Comparative Example 4

The similar method as in Example 5 except for the compounding prescriptions shown in Table 2 was carried out. The result is shown in Table 2. Example 6 is better in both melt-flowability and flexibility than Comparative Example 4, and a satisfactory result is indicated.

[Table 1]

| | Example 1 | Example 2 | Comparative Example 1 | Example 3 | Comparative Example 2 |
|---|---|---|---|---|---|
| Compounding composition (parts by weight) | | | | | |
| [a ①] | 50 | 50 | 50 | 50 | 50 |
| [b1 ①] | 0 | 0 | 0 | 25 | 50 |
| [b2 ①] | 25 | 25 | 50 | 0 | 0 |
| [c1 ①] | 25 | 0 | 0 | 25 | 0 |
| [c2 ①] | 0 | 25 | 0 | 0 | 0 |
| MI (g/10min.) | 15.8 | 19.9 | 9.9 | 32.7 | 23.6 |
| Bending modulus ($kg/cm^2$) | 1856 | 1603 | 2700 | 1519 | 1688 |

[Table 2]

| | Example 4 | Comparative Example 3 | Example 5 | Example 6 | Comparative Example 4 |
|---|---|---|---|---|---|
| Compounding composition (parts by weight) | | | | | |
| [a ②] | 24 | 24 | 0 | 0 | 0 |
| [a ③] | 0 | 0 | 40 | 40 | 40 |
| [b2 ①] | 0 | 20 | 20 | 20 | 60 |
| [b2 ②] | 56 | 56 | 0 | 0 | 0 |
| [c1 ①] | 0 | 0 | 40 | 0 | 0 |
| [c2 ①] | 20 | 0 | 0 | 40 | 0 |
| MI (g/10min.) | 1.5 | 0.8 | 30.7 | 44.7 | 22.3 |
| Bending modulus ($kg/cm^2$) | 371 | 439 | 422 | 388 | 911 |

[c1 ①] and [c2 ①] were produced in accordance with the methods described below.

Transition metal complex: Synthesis of dimethylsilyl (tetramethylcyclopentadienyl)(3-tert-butyl-5-methyl-2-phenoxy)titanium dichloride

(1) Synthesis of 1-bromo-3-tert-butyl-5-methyl-2-phenol

Under nitrogen atmosphere, 20.1g (123mmol) of 2-tert-butyl-4-methylphenol was dissolved in 150ml of toluene in a 500ml four necked flask equipped with a stirrer, and successively, 25.9ml (18.0g, 246mmol) of tert-butylamine was added thereto. The solution was cooled to -70°C, and 10.5ml (32.6g, 204mmol) of bromine was added thereto. The solution was kept at -70°C and stirred for two hours. Then, the temperature of the solution was elevated to room temperature, 100ml of 10% diluted hydrochloric acid per once was added thereto and the solution was rinsed three times. The organic layer obtained after the rinse was dried using anhydrous sodium sulfate, the solvent was removed using an evaporator, and then the residue was purified using a silica gel column to obtain 18.4g (75.7mmol) of colorless oily 1-bromo-3-tert-butyl-5-methyl-2-phenol. Yield was 62%.

(2) Synthesis of 1-bromo-3-tert-butyl-2-methoxy-5-methylbenzene

Under nitrogen atmosphere, 13.9g (57.2mmol) of 1-bromo-3-tert-butyl-5-methyl-2-phenol synthesized in the above-mentioned (1) was dissolved in 40ml of acetonitrile in a 100ml four necked flask equipped with a stirrer, and successively, 3.8g (67.9mmol) of potassium hydroxide was added thereto. Further, 17.8ml (40.6g, 286mmol) of methyl iodide was added, and the mixture was continued to be stirred for 12 hours. Then, the solvent was removed with an evaporator, 40ml of hexane was added to the residue, and a portion soluble in hexane was extracted. The extraction was repeated three times. The solvent was removed from the extract to obtain 13.8g (53.7mmol) of light yellow oily 1-bromo-3-tert-butyl-2-methoxy-5-methylbenzene. Yield was 94%.

(3) Synthesis of (3-tert-butyl-2-methoxy-5-methylphenyl) chlorodimethylsilane

To a solution composed of tetrahydrofuran (31.5ml), hexane (139ml) and 1-bromo-3-tert-butyl-2-methoxy-5-methylbenzene (45g) synthesized in the above-mentioned (2), a 1.6mol/l hexane solution (115ml) of n-butyl lithium was added dropwise over 20 minutes. After the obtained mixture was kept at -40°C for one hour, tetrahydrofuran (31.5ml) was added dropwise.

The mixture obtained above was added dropwise at -40°C in a solution composed of dichlorodimethylsilane (131g) and hexane (306ml). The temperature of the obtained mixture was elevated to room temperature over 2 hours, and further stirred at room temperature for 12 hours.

The solvent and excessive dichlorodimethylsilane were distilled off from the reaction mixture under reduced pressure, and a portion soluble in hexane was extracted from the residue using hexane. The solvent was distilled off from the hexane solution obtained to obtain 41.9g of light yellow oily (3-tert-butyl-2-methoxy-5-methylphenyl)chlorodimethylsilane. Yield was 84%.

(4) Synthesis of (3-tert-butyl-2-methoxy-5-methylphenyl) dimethyl)(tetramethylcyclopentadienyl)silane

To a solution composed of (3-tert-butyl-2-methoxy-5-methylphenyl)chlorodimethylsilane (5.24g) synthesized in the above-mentioned (3) and tetrahydrofuran (50ml), tetramethylcyclopentadienyllithium (2.73g) was added at -35°C, and the temperature of the mixture was elevated to room temperature over 2 hours and further stirred at room temperature for 10 hours.

The solvent was distilled off from the reaction mixture under reduced pressure, and a portion soluble in hexane was extracted from the residue using hexane. The solvent was distilled off from the hexane solution obtained under reduced pressure to obtain 6.69g of light yellow oily (3-tert-butyl-2-methoxy-5-methylphenyl)dimethyl (tetramethylcyclopentadienyl)silane. Yield was 97%.

(5) Synthesis of dimethylsilyl(tetramethylcyclopentadienyl)(3-tert-butyl-5-methyl-2-phenoxy)titanium dichloride

To a solution composed of (3-tert-butyl-2-methoxy-5-methylphenyl)dimethyl(tetramethylcyclopentadienyl) silane (10.04g) synthesized in the above-mentioned (4), toluene (100ml) and triethylamine (6.30g), a 1.63mol/l hexane solution (19.0ml) of n-butyl lithium was added dropwise, and then, the temperature of the mixture was elevated to room temperature over 2 hours and further kept at room temperature for 12 hours.

Under nitrogen atmosphere, the mixture obtained above was added dropwise at 0°C to a toluene solution (50ml) of titanium tetrachloride (4.82g), and then, after the temperature of the mixture was elevated to room temperature over 1 hour, it was refluxed by heating for 10 hours.

The reaction mixture was filtered, the solvent was distilled off from the filtrate, and the residue was re-crystallized from a toluene-hexane mixed solvent to obtain 3.46g of dimethylsilyl(tetramethylcyclopentadienyl)(3-tert-butyl-5-methyl-2-phenoxy)titanium dichloride (shown by the chemical formula as described below) of orange color columnar crystal. Yield was 27%.

Spectrum data were as follow.

$^{1}$H-NMR($CDCl_3$): δ 0.57 (s, 6H), 1.41 (s, 9H), 2.15 (s, 6H), 2.34 (s, 6H), 2.38 (s, 3H), 7.15 (s, 1H), 7.18 (s, 1H)
$^{13}$C-NMR($CDCl_3$): δ 1.25, 14.48, 16.28, 22.47, 31.25, 36.29, 120.23, 130.62, 131.47, 133.86, 135.50, 137.37, 140.82, 142.28, 167.74
Mass spectrum (CI, m/e): 458

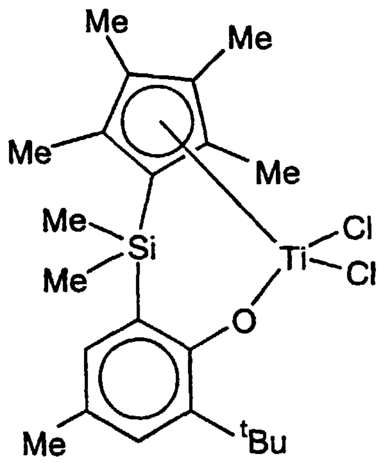

[c2 ①] Production of propylene-1-butene copolymer

Propylene and 1-butene were continuously copolymerized using a 100L SUS polymerization vessel equipped with stirring blades. Namely, hexane is continuously fed as a polymerization solvent at a rate of 83L/hr from the lower part of the polymerization vessel. On the other hand, polymerization solution is continuously extracted from the upper part of the polymerization vessel so that the polymerization solution in the polymerization vessel is kept to 100L in volume. As monomers, propylene and 1-butene were continuously fed at a rate of 12.00kg/hr and 1.33kg/hr respectively, from the lower part of the polymerization vessel in the polymerization vessel. Dimethylsilyl(tetramethylcyclopentadienyl)(3-tert-butyl-5-methyl-2-phenoxy)titanium dichloride, triphenylmethyltetrakis(pentafluorophenyl)borate and triisobutylaluminum (hereinafter, described as TIBA in abbreviation) as catalysts were continuously fed at a rate of 0.046g/hr, 1.328g/hr and 2.640g/hr, respectively, from the lower part of the polymerization vessel in the polymerization vessel. Further, molecular weight control was carried out by hydrogen. The copolymerization reaction was carried out at 50°C by circulating cooling-water in a jacket installed on the outer part of the polymerization vessel. A small amount of ethanol was added in the polymerization solution extracted from the polymerization vessel to terminate the polymerization. After removal of monomers and rinsing with water, the solvent was removed with steam in a large amount of water, and a copolymer was taken out and dried at 80°C under reduced pressure for day and night. According to the above operation, an ethylene-propylene-1-butene-dicyclopentadiene copolymer was obtained at a rate of 4.4kg/hr.

[c2 ②] Production of propylene-1-butene-ethylene copolymer

Ethylene, propylene, 1-butene and dicyclopentadiene were continuously copolymerized using a 100L SUS polymerization vessel equipped with stirring blades. Namely, hexane is continuously fed as a polymerization solvent at a rate of 83L/hr from the lower part of the polymerization vessel. On the other hand, polymerization solution is continuously extracted from the upper part of the polymerization vessel so that the polymerization solution in the polymerization vessel is kept to 100L in volume. As monomers, ethylene, propylene and 1-butene were continuously fed at a rate of 2.00kg/hr, 8.30kg/hr and 12.70kg/hr respectively, from the lower part of the polymerization vessel in the polymerization vessel. Dimethylsilyl(tetramethylcyclopentadienyl)(3-tert-butyl-5-methyl-2-phenoxy)titanium dichloride, triphenylmethyltetrakis(pentafluorophenyl)borate and triisobutylaluminum (hereinafter, described as TIBA in abbreviation) as catalysts were continuously fed at a rate of 0.045g/hr, 1.378g/hr and 2.640g/hr respectively, from the lower part of the polymerization vessel in the polymerization vessel. Further, molecular weight control was carried out by hydrogen. The copolymerization reaction was carried out at 50°C by circulating cooling-water in a jacket installed on the outer part of the polymerization vessel. A little amount of ethanol was added in the polymerization solution extracted from the polymerization vessel to terminate the polymerization. After removal of monomers and rinsing with water, the solvent was removed with steam in a large amount of water, and a copolymer was taken out and dried at 80°C under reduced pressure for day and night. According to the above operation, an ethylene-propylene-1-butene-dicyclopentadiene copolymer was obtained at a rate of 5.0kg/hr.

Measurement related to propylene-1-butene copolymer and propylene-1-butene-ethylene copolymer

Measurement method of the contents of propylene and 1-butene in the propylene-1-butene copolymer and the propylene-1-butene-ethylene copolymer was carried out according to IR method.

(1) Propylene-1-butene copolymer

[Preparation of calibration curve]

Each of the mixtures of a propylene homopolymer and a 1-butene homopolymer having various mixing ratios was molded to prepare a film having a thickness of 0.05mm by hot-pressing.

The absorption ratio of a peak (wave number: $1150cm^{-1}$) derived from the propylene unit to a peak (wave number: $770cm^{-1}$) derived from the 1-butene unit was determined using an infra-red rays photometer, and the contents of 1-butene unit in said mixtures were plotted against the absorption ratios. Regression straight line was determined from these plots, and referred to as a calibration curve. Further, both of a propylene homopolymer and a 1-butene homopolymer in the mixture were dissolved in toluene, then methanol was added, and the precipitate obtained were dried to be used.

[Measurement of 1-butene content]

The propylene-1-butene copolymer was mold to prepare a film having a thickness of 0.05mm by hot-pressing, then the absorption ratio of a peak derived from the propylene unit to a peak derived from the 1-butene unit was determined using an infra-red photometer, and the content of 1-butene unit in the propylene-1-butene copolymer was calculated from the calibration curve obtained by the above-mentioned method.

(2) Propylene-1-butene-ethylene copolymer

[Preparation of calibration curve]

Each of the mixtures of a propylene homopolymer and a 1-butene homopolymer having various mixing ratios was molded to make a film having a thickness of 0.05mm by heat press. The absorptions of a peak (wave number: $1150cm^{-1}$) derived from the propylene unit to a peak (wave number: $770cm^{-1}$) derived from the 1-butene unit were determined using an infra-red rays photometer, and the contents of the propylene unit and the 1-butene unit in said mixtures were plotted against the absorptions. Regression straight line was determined from these plots, and referred to as a calibration curve. Further, both of a propylene homopolymer and a 1-butene homopolymer in the mixture were dissolved in toluene, then methanol was added, and the precipitates obtained were dried to be used.

[Measurement of propylene/1-butene content]

The olefin copolymer was hot-pressed to mold a film having a thickness of 0.05mm, then the absorptions of a peak derived from the propylene unit and a peak derived from the 1-butene unit were determined using infra-red photometer, and the contents of the propylene unit and the 1-butene unit in the olefin copolymer were calculated from the calibration curve obtained by the above-mentioned method.

The hardness of the propylene-1-butene copolymer was measured in accordance with ASTM D2240.

The measurement of differential scanning calorimeter (DSC) was carried out at a rate of 10°C/min. in both a temperature-elevating process and a temperature-lowering process.

The measurement of intrinsic viscosity [η] was carried out according to the fore-mentioned method.

Molecular weight distribution was carried out according to Gel Permeation Chromatography (GPC) (manufacture by Waters Co., Ltd., and 150C/GPC apparatus was used). Elution temperature was 140°C, a column used was Shodex Packed Column A-80M manufacture by Showa-Denko Co., Ltd., and the standard substance of molecular weight used a polystyrene (manufacture by Toso Co., Ltd., and molecular weight: 68 to 8,400,000). The polystyrene-reduced weight average molecular weight (Mw) obtained, number average molecular weight (Mn), and further, the ratio (Mw/Mn) is referred to as the molecular weight distribution. A sample for measurement is prepared by dissolving about 5mg of a polymer in 5ml of o-dichlorobenzene to be a concentration of about 1mg/ml. 400 μL of the sample solution obtained was injected, the flow rate of elution solvent was 1.0ml/min., and it was detected by a refractive index detector.

Compounding was carried out by kneading at a temperature of 200°C and a screw rotational number of 100rpm for 3 minutes using a LABOPLASTOMILL (manufacture by Toyo-seiki Co., Ltd.) of a twin screw batch type kneader. The composition was pressed at 200°C to prepare a sheet having a thickness of 2mm. The test of physical

properties was carried out by stamping out test pieces from the press sheet and then measuring them.

## Industrial Applicability

As illustrated above, according to the present invention, there can be provided an olefin-based thermoplastic elastomer composition making the best use of the merits of an olefin-based material such as its lightweight, easy recycle use, further no generation of poisonous gas when being burnt, and the like, and being excellent in melt property and flexibility, and further in scratch resistance.

## Claims

1. An olefin-based thermoplastic elastomer composition comprising 5 to 93% by weight of (a), 2 to 90% by weight of (b) and 5 to 93% by weight of (c) [(a) + (b) + (c) = 100% by weight] described below:

    (a): a polyolefin-based resin,
    (b): at least one of (b1) and (b2) described below;

        (b1): a hydrogenated aromatic vinyl compound-conjugated diene compound block copolymer obtained by hydrogenating a block copolymer composed of at least two polymer blocks of an aromatic vinyl compound and at least one polymer block of a conjugated diene compound,
        (b2): an ethylene-α-olefin-based copolymer rubber,

    (c): at least one of (c1) and (c2) described below;

        (c1): a propylene-1-butene-based copolymer rubber having a Shore A hardness of 70 or less measured in accordance with ASTM D2240 and an intrinsic viscosity [η] of 0.3dl/g or more measured at a temperature of 70°C in xylene, and
        (c2): a propylene-α-olefin-ethylene-based copolymer rubber having a Shore A hardness of 70 or less measured in accordance with ASTM D2240 and an intrinsic viscosity [η] of 0.3dl/g or more measured at a temperature of 70°C in xylene and comprising propylene, an α-olefin having 4 to 20 carbon atoms and ethylene.

2. An olefin-based thermoplastic elastomer composition according to claim 1, wherein (a) is a propylene-based polymer.

3. An olefin-based thermoplastic elastomer composition according to claim 1, wherein the aromatic vinyl compound of (b1) is styrene.

4. An olefin-based thermoplastic elastomer composition according to claim 1, wherein the conjugated diene compound of (b1) is butadiene and/or isoprene.

5. An olefin-based thermoplastic elastomer composition according to claim 1, wherein (b2) is an ethylene-propylene copolymer rubber.

6. An olefin-based thermoplastic elastomer composition according to claim 1, wherein (c1) has neither crystal-melting peak nor crystallization peak at measurement by a differential scanning calorimeter.

7. An olefin-based thermoplastic elastomer composition according to claim 1, wherein (c1) has a molecular weight distribution, Mw/Mn, of 3 or less at measurement by gel permeation chromatography.

8. An olefin-based thermoplastic elastomer composition according to claim 1, wherein (c2) has neither crystal-melting peak nor crystallization peak at measurement by a differential scanning calorimeter.

9. An olefin-based thermoplastic elastomer composition according to claim 1, wherein (c2) has a molecular weight distribution, Mw/Mn, of 3 or less at measurement by gel permeation chromatography.

# INTERNATIONAL SEARCH REPORT

International application No.
PCT/JP98/05562

A. CLASSIFICATION OF SUBJECT MATTER
Int.Cl⁶ C08L23/00, C08L53/02, C08L23/16

According to International Patent Classification (IPC) or to both national classification and IPC

B. FIELDS SEARCHED

Minimum documentation searched (classification system followed by classification symbols)
Int.Cl⁶ C08L23/00-23/36, C08L53/00-53/02

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP, 8-109288, A (Japan Synthetic Rubber Co., Ltd.), 30 April, 1996 (30. 04. 96), Claims (Family: none) | 1-4, 6-9<br>5 |
| Y<br>A | JP, 7-53799, A (Japan Synthetic Rubber Co., Ltd.), 28 February, 1995 (28. 02. 95), Claims (Family: none) | 1-4, 6-9<br>5 |
| Y<br>A | JP, 5-98097, A (Idemitsu Petrochemical Co., Ltd.), 20 April, 1993 (20. 04. 93), Claims (Family: none) | 1-2, 5-9<br>3-4 |
| A | JP, 6-32951, A (Sumitomo Chemical Co., Ltd.), 8 February, 1994 (08. 02. 94), Claims & US, 5484824, A & EP, 580069, B1 | 1-9 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 9 March, 1999 (09. 03. 99) | 16 March, 1999 (16. 03. 99) |

| Name and mailing address of the ISA/ | Authorized officer |
|---|---|
| Japanese Patent Office | |
| Facsimile No. | Telephone No. |

Form PCT/ISA/210 (second sheet) (July 1992)